# EUROPEAN PATENT APPLICATION

(11) **EP 4 506 226 A1**
(43) Date of publication of application: **12.02.2025**
(21) Application number: 23784724.9
(22) Date of filing: 03.04.2023
(51) Int. Cl.: B60W 50/12, B60W 30/06

(54) **DRIVING ASSISTANCE DEVICE, DRIVING ASSISTANCE METHOD, AND PROGRAM**

(30) Priority: 07.04.2022 JP 2022063942
(71) Applicant: TOYOTA JIDOSHA KABUSHIKI KAISHA, Toyota-shi, Aichi-ken 471-8571 (JP)
(72) Inventor: OISHI Masashi, Toyota-shi, Aichi 471-8571 (JP); KAMINADE Takuya, Toyota-shi, Aichi 471-8571 (JP); IKAI Masaki, Toyota-shi, Aichi 471-8571 (JP)
(74) Representative: D Young & Co LLP
(86) International application number: PCT/JP2023/013773
(87) International publication number: WO 2023/195438

(57) **Abstract**

A driving assistant apparatus 1 includes a parking row recognition section 11, 12, 13A which recognizes a parking slot(s) PL and/or a parked vehicle(s) VL around an own vehicle 100 and recognizes a parking row PR in which the number of the recognized successive parking slot(s) PL and/or parked vehicle(s) VL is equal to or greater than a predetermined first threshold number, a parking lot staying determination section 16 which determines whether or not the own vehicle 100 is present in a parking lot P having the parking row PR, an erroneous operation determination section 17 which obtains an operation state of an acceleration operation element and determines, on the basis of the operation state, whether or not an occupant has performed an erroneous operation of erroneously stepping on the acceleration operation element, and a control section 18 which executes driving power reduction control of reducing driving power of the own vehicle 100 when the parking lot staying determination section 16 determines that the own vehicle 100 is present in the parking lot P and the erroneous operation determination section 17 determines that the occupant has performed the erroneous operation.

## Description

### TECHNICAL FIELD

The present disclosure relates to a driving assistance apparatus, a driving assistance method, and a program.

### BACKGROUND ART

Conventionally, there has been known an apparatus which determines, when the operation amount of an accelerator pedal of a vehicle has increased suddenly, that a driver has erroneously operated the accelerator pedal, and performs driving power reduction control for reducing driving power of the vehicle (see, for example, Patent Documents 1 and 2, etc.).

### PRIOR ART DOCUMENTS

### PATENT DOCUMENTS

Patent Document 1: Japanese Patent Application Laid-Open (kokai) No. 2021-049981
Patent Document 2: Japanese Patent No. 6299179

### SUMMARY OF THE INVENTION

There are situations where a driver intentionally steps on the accelerator pedal greatly while a vehicle is travelling on an ordinary road. Examples of such situations include the case where the driver causes the vehicle to pass a preceding vehicle, the case where the driver causes the own vehicle to merge into a main lane from an acceleration lane, and the case where the driver causes the own vehicle to start on an uphill road. If it is determined that the driver has erroneously operated the accelerator pedal in such a case, the driving power reduction control is performed unnecessarily even when the driver has an intention of accelerating the vehicle. A conceivable method for preventing such unnecessary performance of the driving power reduction control on ordinary roads is enabling the driving power reduction control under a condition that the vehicle is located in a parking lot.

The apparatus described in Patent Document 2 executes driving power reduction control when a vehicle is located in a parking lot and a driver has erroneously operated the accelerator pedal of the vehicle. However, the apparatus described in Patent Document 2 determines that the vehicle is located in a parking lot upon detection of a parking slot line. Therefore, in the case where, for example, road markings (e.g., stop lines at intersections and pedestrian crossings) are detected while the vehicle is travelling on an ordinary road, the apparatus may erroneously detect them as parking slot lines. Namely, the apparatus may erroneously determine that the vehicle is present in a parking lot despite the vehicle being located on an ordinary road. Therefore, there is room for improvement in terms of prevention of unnecessary performance of driving power reduction control.

The present disclosure has been made in order to solve the above-described problem. Namely, one object of the present disclosure is to effectively prevent unnecessary performance of driving power reduction control.

An apparatus of the present disclosure comprises:
a parking row recognition section (11, 12, 13A) which detects a parking slot(s) (PL) and/or a parked vehicle(s) (VL) around an own vehicle (100) on the basis of image data of a captured image around the own vehicle (100) and recognizes a parking row (PR) in which the detected parking slot(s) (PL) and/or the detected parked vehicle(s) (VL) are located in succession and adjacent to each other in a predetermined direction and the number of the parking slot(s) (PL) and/or the parked vehicle(s) (VL) is equal to or greater than a predetermined first threshold number;
a parking lot staying determination section (16) which determines whether or not the own vehicle (100) is present in a parking lot (P) having the parking row (PR);
an erroneous operation determination section (17) which obtains an operation state of an acceleration operation element operated by an occupant of the own vehicle (100) and determines, on the basis of the operation state, whether or not the occupant has performed an erroneous operation of erroneously stepping on the acceleration operation element; and
a control section (18) which executes driving power reduction control of reducing driving power of the own vehicle (100) when the parking lot staying determination section (16) determines that the own vehicle (100) is present in the parking lot (P) and the erroneous operation determination section (17) determines that the occupant has performed the erroneous operation.

A method of the present disclosure comprises:
detecting a parking slot(s) (PL) and/or a parked vehicle(s) (VL) around an own vehicle (100) on the basis of image data of a captured image around the own vehicle (100) and recognizing a parking row (PR) in which the detected parking slot(s) (PL) and/or the detected parked vehicle(s) (VL) are located in succession and adjacent to each other in a predetermined direction and the number of the parking slot(s) (PL) and/or the parked vehicle(s) (VL) is equal to or greater than a predetermined first threshold number;
determining whether or not the own vehicle (100) is present in a parking lot (P) having the parking row (PR);
obtaining an operation state of an acceleration operation element operated by an occupant of the own vehicle (100) and determining, on the basis of the operation state, whether or not the occupant has performed an erroneous operation of erroneously stepping on the acceleration operation element; and
executing driving power reduction control of reducing driving power of the own vehicle (100) upon determination that the own vehicle (100) is present in the parking lot (P) and determination that the occupant has performed the erroneous operation.

A program of the present disclosure causes a computer (10) of a driving assistant apparatus (1) to perform a process comprising:
detecting a parking slot(s) (PL) and/or a parked vehicle(s) (VL) around an own vehicle (100) on the basis of image data of a captured image around the own vehicle (100) and recognizing a parking row (PR) in which the detected parking slot(s) (PL) and/or the detected parked vehicle(s) (VL) are located in succession and adjacent to each other in a predetermined direction and the number of the parking slot(s) (PL) and/or the parked vehicle(s) (VL) is equal to or greater than a predetermined first threshold number;
determining whether or not the own vehicle (100) is present in a parking lot (P) having the parking row (PR);
obtaining an operation state of an acceleration operation element operated by an occupant of the own vehicle (100) and determining, on the basis of the operation state, whether or not the occupant has performed an erroneous operation of erroneously stepping on the acceleration operation element; and
executing driving power reduction control of reducing driving power of the own vehicle (100) upon determination that the own vehicle (100) is present in the parking lot (P) and determination that the occupant has performed the erroneous operation.

According the configuration described above, in the case where the number of a parking slot(s) (PL) and/or a parked vehicle(s) (VL) located in succession and adjacent to each other in a predetermined direction is equal to or greater than the predetermined first threshold number (for example, 5), they are determined to form a parking row (PR). Thus, it becomes possible to effectively prevent erroneous determination, as a parking row, of road markings (e.g., stop lines and pedestrian crossings) drawn on the surfaces of ordinary roads or other vehicles stopping around the own vehicle (100) because of, for example, waiting for a traffic light to change, thereby enabling accurate determination as to whether or not the own vehicle (100) is present in the parking lot (P). Also, as a result of accurate determination as to whether or not the own vehicle (100) is present in the parking lot (P), it becomes possible to effectively prevent unnecessary performance of the driving power reduction control on ordinary roads or the like.

Another mode of the present disclosure comprises a travel path prediction section (15) which predicts a travel path (TP) of the own vehicle (100) on the basis of a travel state of the own vehicle (100),
wherein the parking lot staying determination section (16) determines that the own vehicle (100) is present in the parking lot (P) when the predicted travel path (TP) intersects with the parking row (PR).

According to the present mode, in the case where the travel path (TP) of the own vehicle (100) intersects with the parking row (PR); in other words, in the case where the own vehicle (100) is highly likely to enter the parking row (PR), the own vehicle (100) is determined to be present in the parking lot (P), and the driving power reduction control is enabled, whereby it becomes possible to enhance safety without fail, while effectively preventing unnecessary performance of the driving power reduction control on ordinary roads or the like.

Another mode of the present disclosure comprises an inter parking row corridor determination section (14) which determines, as an inter parking row corridor, an area (E) between a plurality of parking rows (PR) which are recognized by the parking row recognition section (11, 12, 13A), face each other with the own vehicle (100) intervening therebetween, and have a predetermined positional relation,
wherein the parking lot staying determination section (16) determines that the own vehicle (100) is present in the parking lot (P) when the own vehicle (100) is located in the area (E) determined as the inter parking row corridor.

According to the present mode, in the case where a plurality of parking rows (PR) facing each other with the own vehicle (100) intervening therebetween have been recognized, the own vehicle (100) is determined to be present in the parking lot (P) if the own vehicle (100) is located in the area (E) between these parking rows (PR). Thus, it becomes possible to effectively activate the driving power reduction control even in the case where the predicted travel path (TP) of the own vehicle (100) does not intersect with a parking row (PR) in a parking lot (P) in which parking rows (PR) are provided on opposite sides of a corridor (R); for example, a parking lot of a large store or the like.

Another mode of the present disclosure comprises:
a structure recognition section (13C) which recognizes a structure (ST) present around the own vehicle (100) on the basis of a piece of information representing an object around the own vehicle (100); and
a provisional parking row recognition section (13B) which detects a parking slot(s) (PL) and/or a parked vehicle(s) (VL) around the own vehicle (100) on the basis of the image data and recognizes a provisional parking row (PRT) in which the detected parking slot(s) (PL) and/or the detected parked vehicle(s) (VL) are located in succession and adjacent to each other in a predetermined direction and the number of the parking slot(s) (PL) and/or the parked vehicle(s) (VL) is equal to or greater than a predetermined second threshold number which is less than the first threshold number,
wherein, in the case where the structure recognition section (13C) recognizes a structure (ST) which is located on a side opposite the own vehicle (100) with respect to the provisional parking row (PRT) and whose length is equal to or greater than a predetermined length, if the structure (ST) and the provisional parking row (PRT) have a predetermined positional relation, the parking row recognition section (13A) determines that the provisional parking row (PRT) is a parking row (PR).

According to the present mode, in the case where a provisional parking row (PRT) in which the number of a parking slot(s) (PL) and/or a parked vehicle(s) (VL) located in succession is equal to or greater than the second threshold number (for example, 3) and is less than the first threshold number (for example, 5) is recognized around the own vehicle (100), it is determined that the provisional parking row (PRT) is a parking row (PR) if a structure (ST) (e.g., a building) is present rearward of the provisional parking row (PRT) and the distance therebetween is equal to or less than the predetermined distance. Thus, it becomes possible to effectively activate the driving power reduction control even in a relatively small parking lot having a small number of parking slots (for example, a parking lot of a small store), thereby enhancing safety without fail.

Another mode of the present disclosure comprises:
a provisional parking row recognition section (13B) which detects a parking slot(s) (PL) and/or a parked vehicle(s) (VL) around the own vehicle (100) on the basis of the image data and recognizes a provisional parking row (PRT) in which the detected parking slot(s) (PL) and/or the detected parked vehicle(s) (VL) are located in succession and adjacent to each other in a predetermined direction and the number of the parking slot(s) (PL) and/or the parked vehicle(s) (VL) is equal to or greater than a predetermined second threshold number which is less than the first threshold number,
wherein, in the case where at least one or more parking rows (PR) are recognized, if the parking rows (PR) and the provisional parking row (PRT) have a predetermined positional relation, the parking row recognition section (13A) determines that the provisional parking row (PRT) is a parking row (PR).

According to the present mode, in the case where a parking row (PR) in which the number of a parking slot(s) (PL) and/or a parked vehicle(s) (VL) located in succession is equal to or greater than the first threshold number (for example, 5) is recognized around the own vehicle

(100), if a provisional parking row (PRT) in which the number of a parking slot(s) (PL) and/or a parked vehicle(s) (VL) located in succession is equal to or greater than the second threshold number (for example, 3) and less than the first threshold number is further recognized, and the parking row (PR) and the provisional parking row (PRT) have a predetermined positional relation, it is determined that the provisional parking row (PRT) is a parking row (PR). Thus, it becomes possible to effectively detect, as a parking row (PR), a small number of parking slots (PL) and parked vehicles (VL) provided at, for example, an end of a corridor (R) of a parking lot (P) of, for example, a large store or the like. Also, it becomes possible to effectively activate the driving power reduction control for the small number of parking slots (PL) and parked vehicles (VL), thereby enhancing safety without fail.

In the above description, in order to facilitate understanding of the present invention, the constituent elements of the invention corresponding to those of embodiments are accompanied by parenthesized reference symbols which are used in the embodiments; however, the constituent elements of the invention are not limited to those in the embodiments defined by the reference symbols.

### BRIEF DESCRIPTION OF THE DRAWINGS

[FIG. 1] Schematic overall configuration diagram of a driving assistant apparatus according to a first embodiment.
[FIG. 2] Schematic diagram used for describing exemplary separation lines drawn on the road surface of a parking lot.
[FIG. 3] Schematic diagram used for describing exemplary separation lines drawn on the road surface of a parking lot.
[FIG. 4] Schematic diagram used for describing exemplary separation lines drawn on the road surface of a parking lot.
[FIG. 5] Schematic diagram used for describing exemplary separation lines drawn on the road surface of a parking lot.
[FIG. 6] Schematic diagram used for describing exemplary separation lines drawn on the road surface of a parking lot.
[FIG. 7] Schematic diagram showing a top view of a parked vehicle which is a vehicle parked in a parking lot.
[FIG. 8] Schematic diagram used for describing determination of a parking row on the basis of parking slots which are adjacent to each other.
[FIG. 9] Schematic diagram used for describing determination of a parking row on the basis of contour lines of parked vehicles which are adjacent to each other.
[FIG. 10] Schematic diagram used for describing determination of a parking row on the basis of a parking slot and a parked vehicle contour line which are adjacent to each other.
[FIG. 11] Schematic diagrams used for describing a rectangular frame which defines a parking row.
[FIG. 12] Schematic diagrams used for describing a rectangular frame which defines a parking row.
[FIG. 13] Schematic diagrams used for describing a rectangular frame which defines a parking row.
[FIG. 14] Schematic top view which shows a parking row and an own vehicle travelling in a corridor in a parking lot.
[FIG. 15] Flowchart used for describing a routine of a process for parking row determination, parking lot staying determination, and driving power reduction control according to the first embodiment.
[FIG. 16] Schematic overall configuration diagram of a driving assistant apparatus according to a second embodiment.
[FIG. 17] Schematic diagram showing a top view of a pair of parking rows facing each other with a space in a longitudinal direction therebetween.
[FIG. 18] Schematic diagram used for describing determination of an inter parking row corridor.
[FIG. 19] Flowchart used for describing a routine of a process for parking row determination, parking lot staying determination, and driving power reduction control according to the second embodiment.
[FIG. 20] Schematic overall configuration diagram of a driving assistant apparatus according to a third embodiment.
[FIG. 21] Schematic diagram used for describing determination of a provisional parking row.
[FIG. 22] Schematic diagram used for describing determination of a provisional parking row.
[FIG. 23] Schematic diagram used for describing determination of a provisional parking row.
[FIG. 24] Schematic diagram used for describing the positional relation between a provisional parking row and a structure.
[FIG. 25] Flowchart used for describing a routine of a process for parking row determination, parking lot staying determination, and driving power reduction control according to the third embodiment.
[FIG. 26] Schematic overall configuration diagram of a driving assistant apparatus according to a fourth embodiment.
[FIG. 27] Schematic diagram used for describing the positional relation between a rectangular frame which defines a parking row and a provisional rectangular frame which defines a provisional parking row.
[FIG. 28] Flowchart used for describing a routine of a process for parking row determination, parking lot staying determination, and driving power reduction control according to the fourth embodiment.

### MODES FOR CARRYING OUT THE INVENTION

A driving assistant apparatus, a driving assistant method, and a program according to the present embodiment will now be described with reference to the drawings. Identical components are denoted by the same reference symbol, and they have the same name and function. Therefore, their detailed description will not be repeated.

### [Overall configuration]

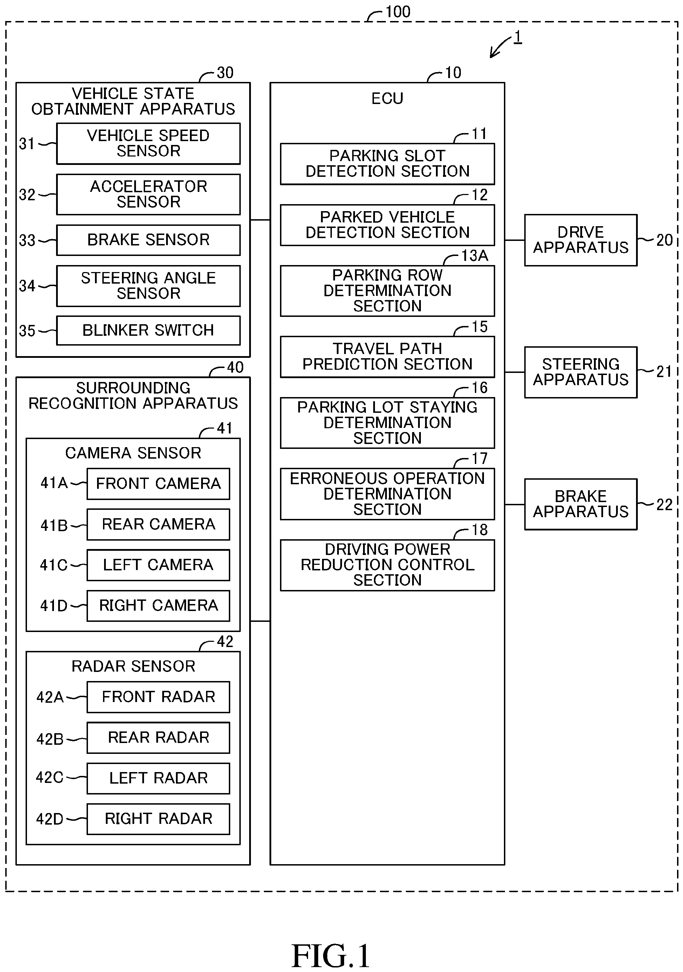

FIG. 1 is a schematic overall configuration diagram of a driving assistant apparatus 1 according to the present embodiment. The driving assistant apparatus 1 is mounted on a vehicle 100. In the following description, the vehicle 100 including the driving assistant apparatus 1 mounted thereon will be also referred to as the "own vehicle" so as to distinguish it from other vehicles. The driving assistant apparatus 1 includes an ECU 10. The ECU 10 includes a microcomputer as a main part. The ECU is an abbreviation for Electronic Control Unit. The microcomputer includes a CPU, a ROM, a RAM, an interface, etc., and the CPU realizes various types of functions by executing instructions (programs and routines) stored in the ROM.

The ECU 10 is a central control apparatus which executes driving power reduction control for reducing driving power of the vehicle 100 in the case where the vehicle 100 is present in a parking lot and a driver has erroneously operated an accelerator pedal (acceleration operation element) (miss-stepping). Therefore, a drive apparatus 20, a steering apparatus 21, a brake apparatus 22, a vehicle state obtainment apparatus 30, a surrounding recognition apparatus 40, etc. are communicably connected to the ECU 10.

The drive apparatus 20 generates driving power to be transmitted to drive wheels of the vehicle 100. The drive apparatus 20 is, for example, an electric motor or an engine. In the apparatus of the present embodiment, the vehicle 100 may be any of a hybrid electric vehicle (HEV), a plug-in hybrid vehicle (PHEV), a fuel cell vehicle (FCEV), an electric vehicle (BEV), or an engine vehicle. The steering apparatus 21 is, for example, an electric power steering apparatus and applies steering forces to wheels of the vehicle 100. The brake apparatus 22 is, for example, a disk brake apparatus and applies braking forces to the wheels of the vehicle 100.

The vehicle state obtainment apparatus 30 is a group of sensors for obtaining the state of the vehicle 100. Specifically, the vehicle state obtainment apparatus 30 includes a vehicle speed sensor 31, an accelerator sensor 32, a brake sensor 33, a steering angle sensor 34, a blinker switch 35, etc.

The vehicle speed sensor 31 detects the travel speed of the vehicle 100 (vehicle speed V) and transmits the detected vehicle speed V to the ECU 10. The vehicle speed sensor 31 may be a wheel speed sensor. The accelerator sensor 32 detects the amount of operation of an unillustrated accelerator pedal by a driver and transmits the detected accelerator operation amount to the ECU 10. The brake sensor 33 detects the amount of operation of an unillustrated brake pedal by the driver and transmits the detected brake operation amount to the ECU 10. The steering angle sensor 34 detects the steering angle of an unillustrated steering wheel (or a steering shaft) and transmits the detected steering angle to the ECU 10. The blinker switch 35 detects operation of an unillustrated blinker lever by the driver. When the driver operates the blinker lever clockwise or counter clockwise from its neutral position, the blinker switch 35 transmits to the ECU 10 an ON signal which indicates that the blinker lever is operated.

The surrounding recognition apparatus 40 is a group of sensors for obtaining pieces of object information regarding objects around the vehicle 100. Specifically, the surrounding recognition apparatus 40 includes a camera sensor 41, a radar sensor 42, etc. Examples of the pieces of object information include surrounding vehicles, surrounding buildings, intersections, traffic lights, signs, separation lines of parking lots, and white lines, stop lines, lines for temporary stop, etc. on roads. The pieces of object information representing the objects around the vehicle 100 obtained by the surrounding recognition apparatus 40 are transmitted to the ECU 10.

The camera sensor 41 captures the images of surroundings of the vehicle 100 and processes the obtained image data, thereby obtaining the images of the surroundings of the vehicle 100. The camera sensor 41 is, for example, a stereo camera or a monocular camera, and a digital camera including an image sensor such as a CMOS or a CCD can be used.

In the present embodiment, the camera sensor 41 includes a front camera 41A, a rear camera 41B, a left camera 41C, and a right camera 41D. The front camera 41A captures the image of a surrounding area in the forward direction of the vehicle 100 and transmits generated front-side image data to the ECU 10. The rear camera 41B captures the image of a surrounding area in the rearward direction of the vehicle 100 and transmits generated rear-side image data to the ECU 10. The left camera 41C captures the image of a surrounding area on the left side of the vehicle 100 and transmits generated left-side image data to the ECU 10. The right camera 41D captures the image of a surrounding area on the right side of the vehicle 100 and transmits generated right-side image data to the ECU 10. Notably, in the following description, the plurality of cameras 41A to 41D will be referred to simply as the "camera sensor 41." Also, the front-side image data, the rear-side image data, the left-side image data, and the right-side image data will be referred to simply as "image data."

The radar sensor 42 detects objects present in a region around the vehicle 100. The radar sensor 42 includes a millimeter wave radar and/or an LiDAR. The millimeter wave radar radiates a radio wave in the millimeter wave band (millimeter wave) and receives a millimeter wave (reflection wave) reflected by an object present in the region to which the millimeter wave is radiated. The millimeter wave radar obtains the relative distance between the vehicle 100 and the object, the relative speed between the vehicle 100 and the object, etc. on the basis of the phase difference between the transmitted millimeter wave and the received reflection wave, the level of attenuation of the reflection wave, the time elapsed until the reflection wave is received after the millimeter wave has been transmitted, etc. The LiDAR emits pulses of laser light having a wavelength shorter than that of the millimeter wave in different directions sequentially through scanning operation, and receives reflection light from an object, thereby obtaining the shape of the object detected around the vehicle 100, the relative distance between the vehicle 100 and the object, the relative speed between the vehicle 100 and the object, etc.

In the present embodiment, the radar sensor 42 includes a front radar 42A, a rear radar 42B, a left radar 42C, and a right radar 42D. The front radar 42A detects an object present in the area in the forward direction of the vehicle 100 and transmits a piece of information of the detected front-side object to the ECU 10. The rear radar 42B detects an object present in the area in the rear direction of the vehicle 100 and transmits a piece of information of the detected rear-side object to the ECU 10. The left radar 42C detects an object present in the area on the left side of the vehicle 100 and transmits a piece of information of the detected left-side object to the ECU 10. The right radar 42D detects an object present in the area on the right side of the vehicle 100 and transmits a piece of information of the detected right-side object to the ECU 10. Notably, in the following description, the plurality of radars 42A to 42D will be referred to simply as the "radar sensor 42."

### [First embodiment]

Next, the details of the ECU 10 according to a first embodiment will be described. The ECU 10 includes, as part of its functional elements, a parking slot detection section 11, a parked vehicle detection section 12, a parking row determination section 13A, a travel path prediction section 15, a parking lot staying determination section 16, an erroneous operation determination section 17, and a driving power reduction control section 18. Although these functional elements will be described under the assumption that these functional elements are contained in the ECU 10, which is a single hardware unit. However, some of the functional elements may be provided in another ECU different from the ECU 10. Alternatively, all or some of the functional elements of the ECU 10 may be provided in an information processing apparatus of a facility (for example, a management center or the like) which can communicate with the vehicle 100.

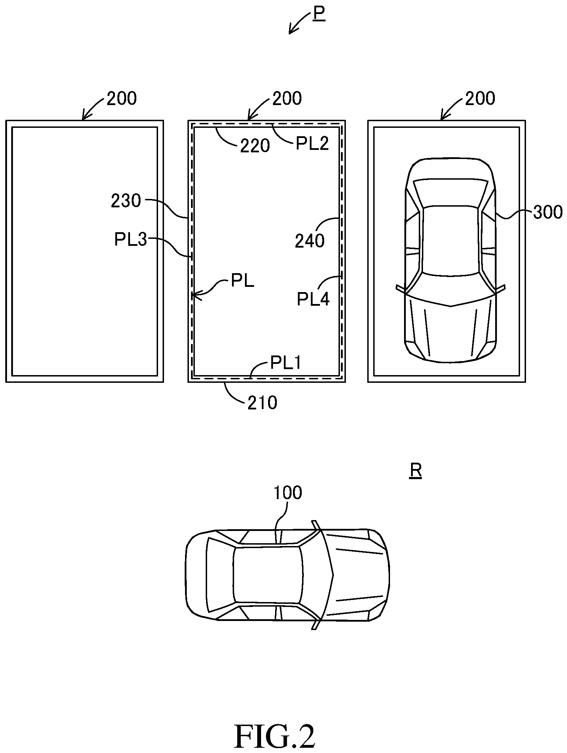

The parking slot detection section 11 detects a parking slot(s) within a parking lot on the basis of the image data (data of the images of the surroundings of the vehicle 100 captured by the camera sensor 41). FIGS. 2 to 6 are diagrams used for describing examples of separation lines 200 drawn on the road surface of a parking lot P. In FIGS. 2 to 6, reference symbol 300 shows a parked vehicle (another vehicle) which is a vehicle parked in the parking lot P, and reference symbol R shows a corridor in which the vehicle 100 having entered the parking lot P travels.

The parking slot detection section 11 extracts the separation lines 200 from the image data transmitted from the camera sensor 41 by performing image analyzing processing (e.g., edge extraction, pattern matching, and characteristic point extraction) on the image data, and detects parking slots PL (see broken lines) on the basis of the extracted separation lines 200. Herein, the separation lines 200 refer to white lines, yellow lines, or the like which are drawn on the road surface of the parking lot P so as to separate the parking slots PL, each of which allows parking of a single vehicle therein. A determination as to whether or not each extracted separation line 200 is a line for separating the parking slots PL may be made by, for example, comparing the size of an area defined by the extracted separation line 200 and the size (width and depth) of typical parking slots of a general public parking lot.

Notably, in the following description, of boundary lines which form a rectangular parking slot PL, a boundary line which faces a corridor R will be referred to as a front-side boundary line PL1. Also, a boundary line which extends approximately parallel to the front-side boundary line PL1 and is farther away from the corridor R than the front-side boundary line PL1 will be referred to as a rear-side boundary line PL2. Also, a boundary line which perpendicularly intersects with the boundary lines PL1 and PL2 and is located on the left side as viewed from the corridor R side will be referred to as a left-side boundary line PL3, and a boundary line which perpendicularly intersects with the boundary lines PL1 and PL2 and is located on the right side as viewed from the corridor R side will be referred to as a right-side boundary line PL4.

In the example shown in FIG. 2, each separation line 200 is a solid line which is drawn on the road surface and defines the shape of an approximately rectangular frame. In this case, of the two separation lines 210 and 220 extending approximately parallel to the extension direction of the corridor R, the separation line 210 located on the corridor R side is extracted by the parking slot detection section 11 as the front-side boundary line PL1, and the separation line 220 which is farther away from the corridor R than the separation line 210 is extracted by the parking slot detection section 11 as the rear-side boundary line PL2. Also, of the two separation lines 230 and 240 approximately perpendicularly intersecting with the separation lines 210 and 220, the separation line 230 located on the left side as viewed from the corridor R side is extracted by the parking slot detection section 11 as the left-side boundary line PL3, and the separation line 240 located on the right side as viewed from the corridor R side is extracted by the parking slot detection section 11 as the left-side boundary line PL4.

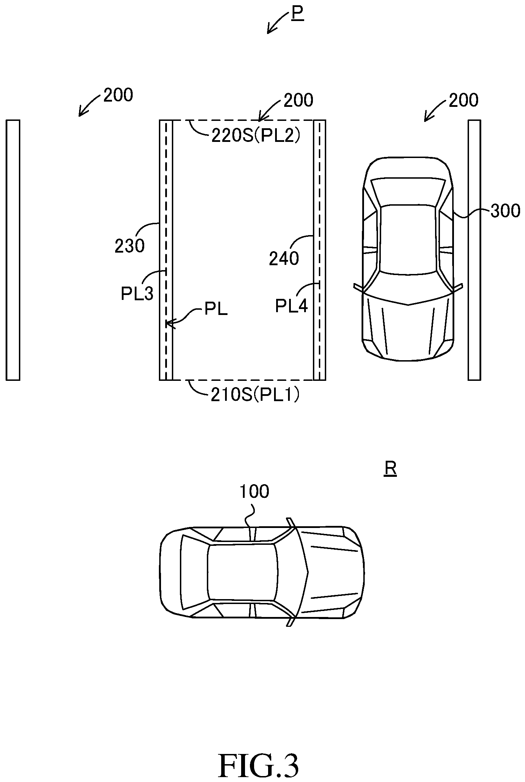

In the example shown in FIG. 3, each separation line 200 is drawn as two parallel straight lines which extend approximately perpendicularly to the extension direction of the corridor R, and a vehicle is parked between these two parallel straight lines. In this case, of the two parallel separation lines 230 and 240, the separation line 230 located on the left side as viewed from the corridor R side is extracted by the parking slot detection section 11 as the left-side boundary line PL3, and the separation line 240 located on the right side as viewed from the corridor R side is extracted by the parking slot detection section 11 as the right-side boundary line PL4. Also, a first imaginary separation line 210S which connects corridor R side longitudinal end portions of the separation lines 230 and 240 is extracted by the parking slot detection section 11 as a front-side boundary line PL1, and a second imaginary separation line 220S which connects the end portions on the side opposite the corridor R is extracted by the parking slot detection section 11 as a rear-side boundary line PL2.

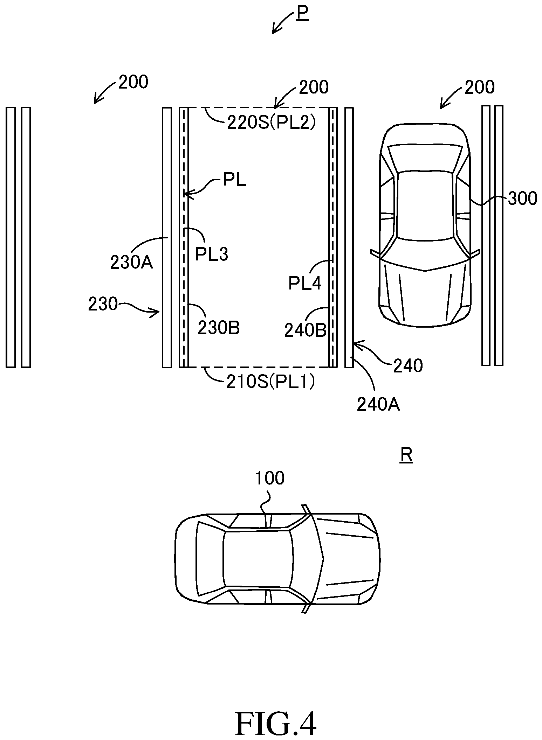

In the example shown in FIG. 4, each separation line 200 is drawn as two parallel double straight lines (double separation lines 230 and 240) which extend approximately perpendicularly to the extension direction of the corridor R. Notably, in the following description, of the separation lines 230A, 230B, 240A, and 240B of the double separation lines 230 and 240, the separation lines on the mutually facing side will be referred to as inner-side separation lines 230B and 240B. Of the inner-side separation lines 230B and 240B of the double separation lines 230 and 240 drawn on the road surface, the inner-side separation line 230B located on the left side as viewed from the corridor R side is extracted by the parking slot detection section 11 as the left-side boundary line PL3, and the inner-side separation line 240B located on the right side as viewed from the corridor R side is extracted by the parking slot detection section 11 as the right-side boundary line PL4. Also, a first imaginary separation line 210S which connects corridor R side longitudinal end portions of the inner-side separation lines 230B and 240B is extracted by the parking slot detection section 11 as the front-side boundary line PL1, and a second imaginary separation line 220S which connects the end portions on the side opposite the corridor R is extracted by the parking slot detection section 11 as the rear-side boundary line PL2.

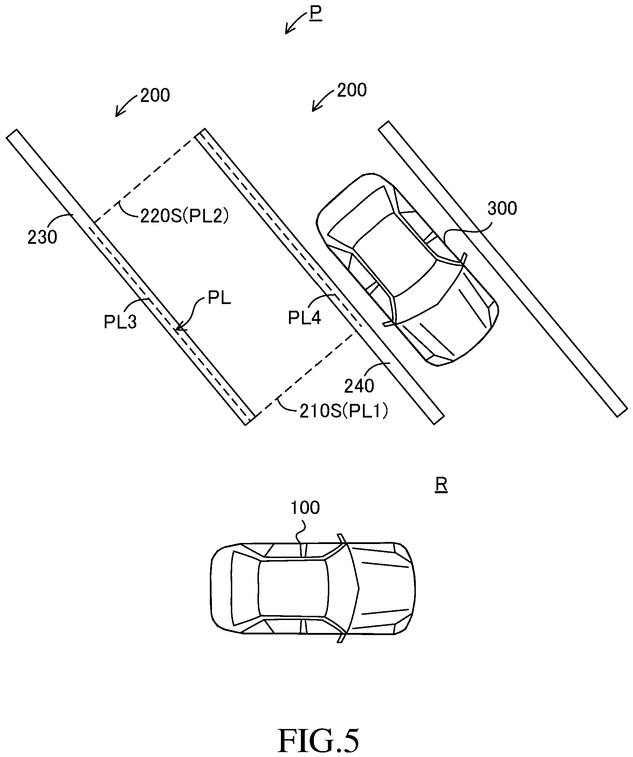

In the example shown in FIG. 5, each separation line 200 is drawn as two straight lines which face in parallel with a predetermined distance therebetween and incline at a predetermined angle with respect to the extension direction of the corridor R. In this case, of the two parallel separation lines 230 and 240 drawn on the road surface, the separation line 230 located on the left side as viewed from the corridor R side is extracted by the parking slot detection section 11 as the left-side boundary line PL3, and the separation line 240 located on the right side as viewed from the corridor R side is extracted by the parking slot detection section 11 as the right-side boundary line PL4. Also, a first imaginary separation line 210S which extends approximately perpendicularly from the corridor R side end portion of the separation line 230 toward the separation line 240 is extracted by the parking slot detection section 11 as the front-side boundary line PL1, and a second imaginary separation line 220S which extends approximately perpendicularly from the end portion of the separation line 240 on the side opposite the corridor R toward the separation line 230 is extracted by the parking slot detection section 11 as the rear-side boundary line PL2.

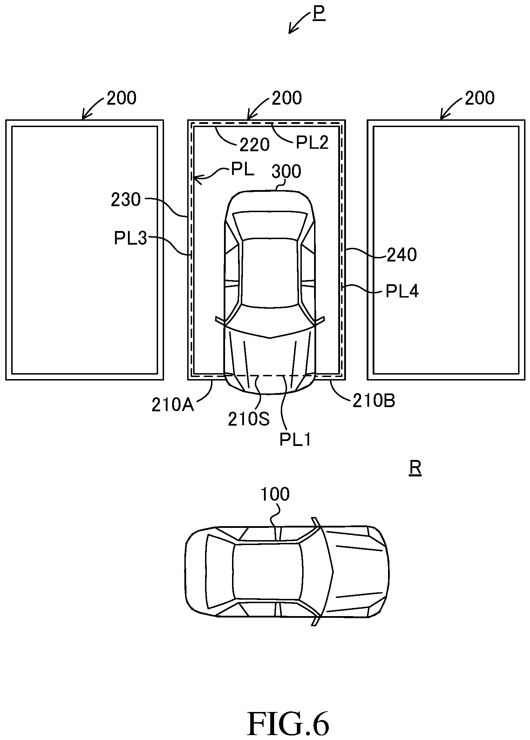

FIG. 6 shows a state in which a parked vehicle 300 projects toward the corridor R side and a portion of the separation line 210 cannot be extracted. In this case, the separation line 230, the separation line 240, and the separation line 220, which are not hidden by the parked vehicle 300, are extracted by the parking slot detection section 11 as the left-side boundary line PL3, the right-side boundary line PL4, and the rear-side boundary line PL2, respectively. Also, portions 210A and 210B of the separation line 210 not hidden by the parked vehicle 300 and an imaginary separation line 210S which connects end portions of the unhidden portions 210A and 210B are extracted by the parking slot detection section 11 as the front-side boundary line PL1.

Notably, in FIG. 6, the case where the separation line 210 on the corridor R side is hidden is shown as an example. However, similar processing is performed in the case where other separation lines 220, 230, and 240 are hidden by the parked vehicle 300, the case where the separation lines 210 to 240 are hidden by an obstacle other than the parked vehicle 300, or the case where a portion(s) of the separation lines 210 to 240 has disappeared due to deterioration or the like. Therefore, their descriptions are omitted. Also, in the case where the separation line 200 cannot be extracted overall, it is sufficient that a contour line of the parked vehicle 300 obtained by the parked vehicle detection section 12 is preferentially used for determination of a parking row which will be described later.

The parking slot detection section 11 obtains pieces of information representing the positions of the extracted boundary lines PL1 to PL4 in relation to the own vehicle 100 (for example, the coordinates in an x-y plane coordinate system whose origin coincides with the position of the own vehicle 100). Also, the parking slot detection section 11 transmits the obtained pieces of information representing the positions of the extracted boundary lines PL1 to PL4 to the parking row determination section 13 at predetermined intervals. Notably, the types of the separation lines 200 drawn on the road surface of the parking lot P are not limited to those shown in FIGS. 2 to 5 as examples and may be other separation lines, for example, these separation lines may be present in a mixed manner or may be drawn as broken lines.

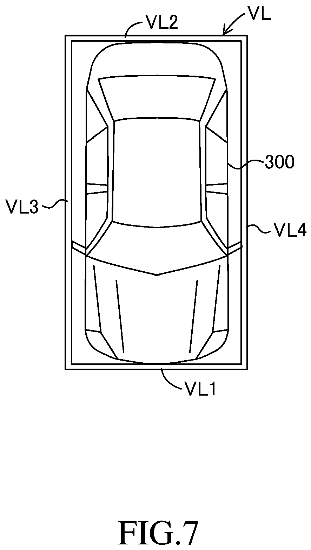

Referring back to FIG. 1, the parked vehicle detection section 12 obtains a vehicle contour line which serves as the boundary between the parked vehicle 300 and the road surface (hereinafter, referred to as the "parked vehicle contour line") on the basis of the image data (data of images of the surroundings of the vehicle 100 captured by the camera sensor 41). FIG. 7 is a schematic diagram showing a top view of the parked vehicle 300 parked in a parking lot. In FIG. 7, reference symbol VL shows the parked vehicle contour line. Notably, although the parked vehicle contour line VL actually has a complex shape, including protrusions of side view mirrors and curved lines of bumpers, etc., in the present embodiment, the parked vehicle contour line VL will be described as a line depicting the smallest rectangular frame which surrounds the outer circumference of the body of the parked vehicle 300.

The parked vehicle detection section 12 first determines whether or not the parked vehicle 300 is contained in the images data of the images captured by the camera sensor 41, by performing image analyzing processing (e.g., edge extraction, pattern matching, and characteristic point extraction) on the image data. Also, when the parked vehicle detection section 12 determines that the parked vehicle 300 is contained in the image data, the parked vehicle detection section 12 determines the line depicting the smallest rectangular frame which surrounds the outer circumference of the body of the parked vehicle 300 (hereinafter, the line will be referred to as the "rectangular frame line") in the image data and extracts the determined rectangular frame line as the parked vehicle contour line VL.

Specifically, the parked vehicle detection section 12 extracts a portion of the determined frame line corresponding to the front end of the parked vehicle 300 as a front-side contour line VL1. Also, the parked vehicle detection section 12 extracts a portion of the determined frame line corresponding to the rear end of the parked vehicle 300 as a back-side contour line VL2. Also, the parked vehicle detection section 12 extracts a portion of the determined frame line corresponding to the left end of the parked vehicle 300 as a left-side contour line VL3. Also, the parked vehicle detection section 12 extracts a portion of the determined frame line corresponding to the right end of the parked vehicle 300 as a right-side contour line VL4. The parked vehicle detection section 12 obtains pieces of information representing the positions of the extracted contour lines VL1 to VL4 in relation to the own vehicle 100 (for example, the coordinates in the x-y plane coordinate system whose origin coincides with the position of the own vehicle 100) and transmits the obtained pieces of position information to the parking row determination section 13A at predetermined intervals.

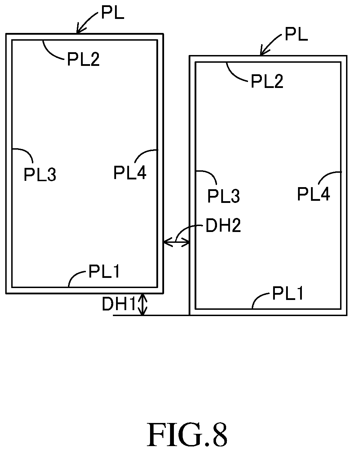

On the basis of the pieces of information transmitted from the parking slot detection section 12 and representing the positions of the parking slots PL and the piece of information transmitted from the parked vehicle detection section 11B and representing the position of the parked vehicle contour line VL, the parking row determination section 13A determines whether or not the parking slots PL and the parked vehicle contour line VL form a continuous parking row. A specific process for parking row determination will be described below on the basis of FIGS. 8 to 12. Notably, in the following description, the lengthwise direction of the parking slots PL and the parked vehicle contour line VL is defined as the "longitudinal direction," and the direction approximately perpendicular to the lengthwise direction is defined as the "lateral direction." Also, in the following description, the case of side-by-side parking where the parking slots PL and the parked vehicle contour line VL are located adjacent to each other in the lateral direction will be described as an example. Since the same processing is performed in the case of parallel parking where these are located adjacent to each other in the longitudinal direction, the processing for such a case will not be described.

FIG. 8 is a schematic diagram used for describing determination of a parking row on the basis of parking slots PL located adjacent to each other. In the case where parking slots PL located adjacent to each other are obtained from the image data, on the basis of pieces of information representing their front-side boundary lines PL1, the parking row determination section 13A computes a separation distance DH1 in the longitudinal direction between the front-side boundary lines PL1. Also, the parking row determination section 13A determines whether or not a first condition is satisfied. The first condition is that the computed separation distance DH1 is equal to or les than a predetermined first threshold value. Notably, satisfaction of the first condition may be determined on the basis of the computed separation distance between the back-side boundary lines PL2 of the parking slots PL located adjacent to each other.

Also, on the basis of pieces of information representing the positions of the left-side and right-side boundary lines PL3 and PL4 of the parking slots PL located adjacent to each other (the right-side boundary line PL4 of the parking slot PL on the left side in the drawing and the left-side boundary line PL3 of the parking slot PL on the right side in the drawing), the parking row determination section 13A computes a separation distance DH2 in the lateral direction between these left-side and right-side boundary lines PL3 and PL4. Also, the parking row determination section 13A determines whether or not a second condition is satisfied. The second condition is that the computed separation distance DH2 is equal to or less than a predetermined second threshold value. No particular limitation is imposed on the first and second threshold values, and the first and second threshold values may be set on the basis of the typical numerical values of general public parking lots. In the case where both the first and second conditions are satisfied, the parking row determination section 13A determines that these parking slots PL located adjacent to each other are successive in the lateral direction.

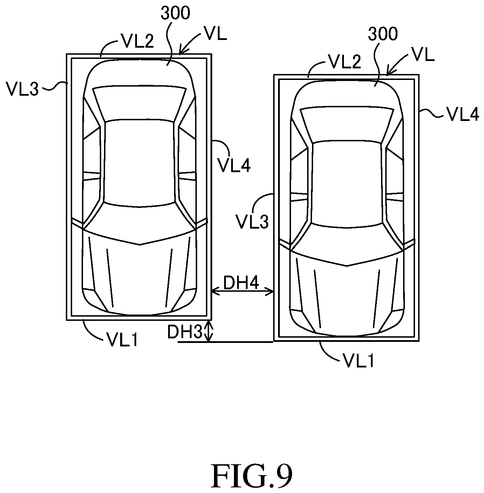

FIG. 9 is a schematic diagram used for describing determination on the basis of parked vehicle contour lines VL located adjacent to each other. In the case where parked vehicle contour lines VL located adjacent to each other are obtained from the image data, on the basis of pieces of information representing the positions of their front-side contour lines VL1, the parking row determination section 13A computes a separation distance DH3 in the longitudinal direction between the front-side contour lines VL1. Also, the parking row determination section 13A determines whether or not a third condition is satisfied. The third condition is that the computed separation distance DH3 is equal to or less than a predetermined third threshold value. Notably, satisfaction of the third condition may be determined on the basis of the separation distance between the back-side contour lines VL2 of the parked vehicle contour lines VL located adjacent to each other.

Also, on the basis of pieces of information representing the positions of the left-side and right-side contour lines VL3 and VL4 of the parked vehicle contour lines VL located adjacent to each other (the right-side contour line VL4 of the parked vehicle contour line VL on the left side in the drawing and the left-side contour line PL3 of the parked vehicle contour line VL on the right side in the drawing), the parking row determination section 13A computes a separation distance DH4 in the lateral direction between these left-side and right-side contour lines VL3 and VL4. Also, the parking row determination section 13A determines whether or not a fourth condition is satisfied. The fourth condition is that the computed separation distance DH4 is equal to or less than a predetermined fourth threshold value. No particular limitation is imposed on the third and fourth threshold values. However, it is preferred that at least the fourth threshold value be set to be greater than the above-described second threshold value. In the case where both the third and fourth conditions are satisfied, the parking row determination section 13A determines that these parked vehicle contour lines VL located adjacent to each other are successive in the lateral direction.

Notably, in the example shown in FIG. 9, both the parked vehicles 300 are rearward parked vehicles which are vehicles moved rearward into parking areas and parked there. However, both the parked vehicles 300 may be forward parked vehicles which are vehicles moved forward into parking areas and parked there. Alternatively, one parked vehicle 300 may be a rearward parked vehicle and the other parked vehicle may be a forward parked vehicle. In the case where one parked vehicle 300 is a rearward parked vehicle and the other parked vehicle is a forward parked vehicle, satisfaction of the above-described third condition may be determined on the basis of the separation distance between the front-side contour line VL1 of one parked vehicle contour line VL and the rear-side contour line VL2 of the other parked vehicle contour line VL. Determination as to whether each parked vehicle 300 is a forward parked vehicle or a rearward parked vehicle may be performed by performing machine learning (pattern matching, etc.) on the image data.

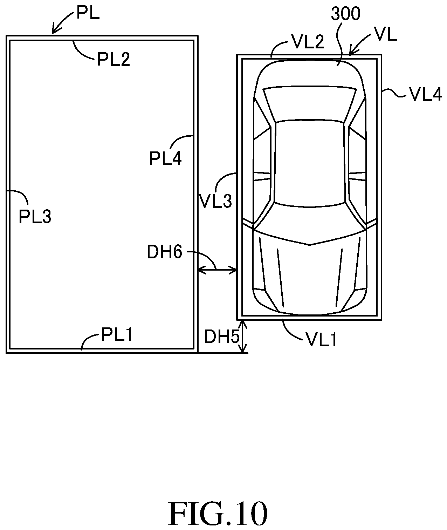

FIG. 10 is a schematic diagram used for describing determination on the basis of a parking slot PL and a parked vehicle contour line VL located adjacent to each other. In the case where a parking slot PL and a parked vehicle contour line VL are obtained from the image data, on the basis of a piece of information representing the position of the front-side boundary line PL1 of the parking slot PL and a piece of information representing the position of the front-side contour line VL1 of the parked vehicle contour line VL, the parking row determination section 13A computes a separation distance DH5 in the longitudinal direction between the front-side boundary line PL1 and the front-side contour line VL1. Also, the parking row determination section 13A determines whether or not a fifth condition is satisfied. The fifth condition is that the computed separation distance DH5 is equal to or less than a predetermined fifth threshold value. Notably, satisfaction of the fifth condition may be determined on the basis of the separation distance between the back-side boundary line PL2 of the parking slot PL and the back-side contour line VL2 of the parked vehicle contour line VL.

Also, on the basis of pieces of information representing the positions of the left-side and right-side boundary lines PL3 and PL4 of the parling slot PL and the left-side and right-side contour lines VL3 and VL4 of the parked vehicle contour line VL (in the example shown in the drawing, the right-side boundary line PL4 of the parking slot PL on the left side in the drawing and the left-side contour line VL3 of the parked vehicle contour line VL on the right side in the drawing), the parking row determination section 13A computes a separation distance DH6 in the lateral direction therebetween. Also, the parking row determination section 13A determines whether or not a sixth condition is satisfied. The sixth condition is that the computed separation distance DH6 is equal to or less than a predetermined sixth threshold value. No particular limitation is imposed on the fifth and sixth threshold values. However, it is preferred that at least the sixth threshold value be set to be greater than the above-described second threshold value and less than the above-described fourth threshold value. In the case where both the fifth and sixth conditions are satisfied, the parking row determination section 13A determines that the parking slot PL and the parked vehicle contour line VL located adjacent to each other are successive in the lateral direction.

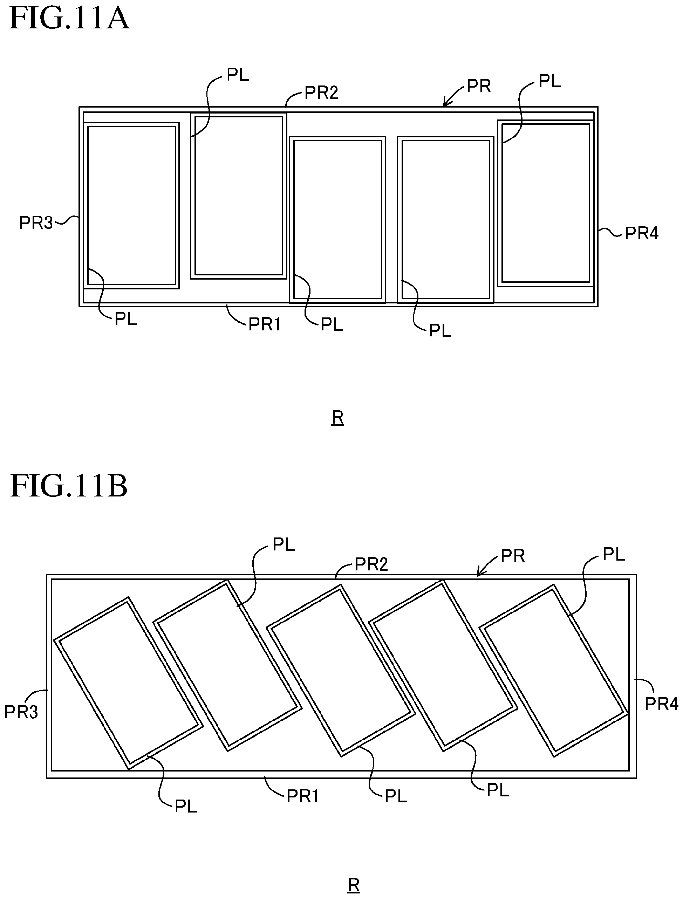

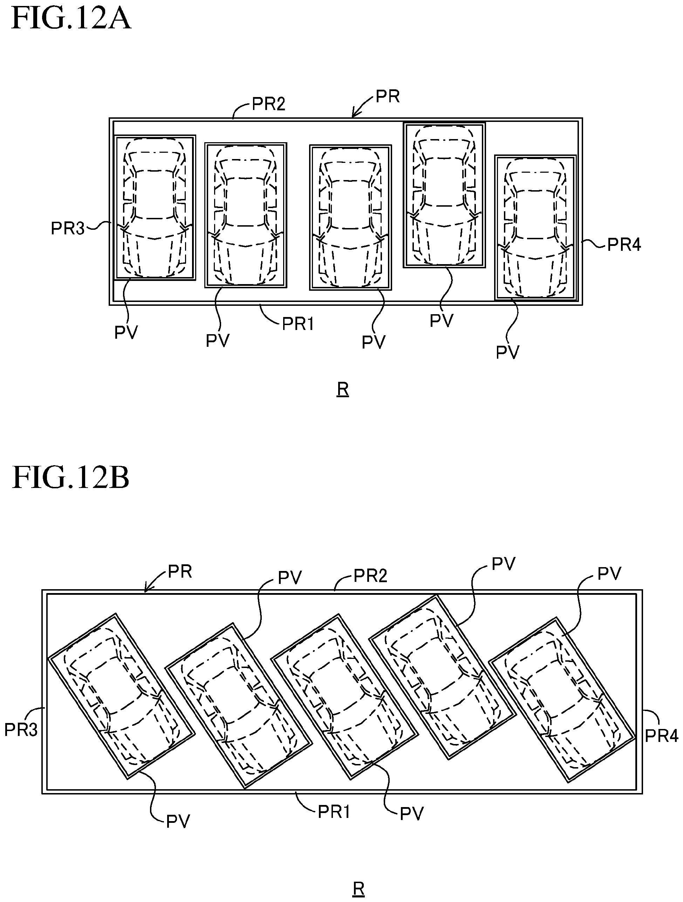

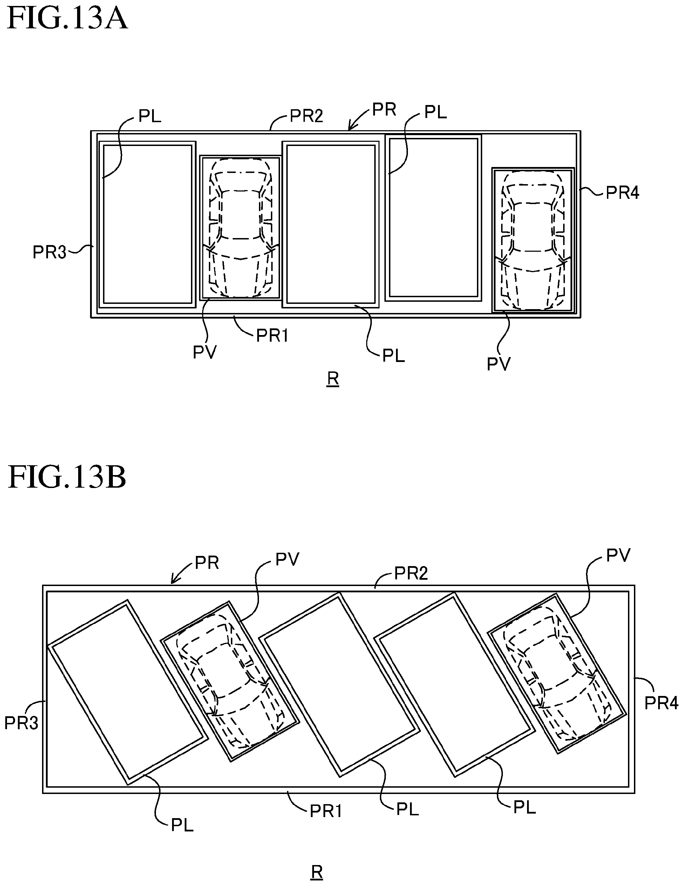

In the case where the number of successive parking slots PL, the number of successive parked vehicle contour lines VL, or the number of successive parking slots PL and parked vehicle contour lines VL located in a random order is equal to or greater than a predetermined first threshold number (for example, 5), the parking row determination section 13A determines that they form a parking row. Specifically, in the case where, as shown in FIGS. 11(A) and 11(B), the number of successive parking slots PL is equal to or greater than the first threshold number (in the example shown in the drawing, five parking slots PL), the parking row determination section 13A determines that the smallest rectangular frame PR which accommodates the set of parking slots PL is a parking row. Also, in the case where, as shown in FIGS. 12(A) and 12(B), the number of successive parked vehicle contour lines VL is equal to or greater than the first threshold number (in the example shown in the drawing, five parked vehicle contour lines VL), the parking row determination section 13A determines that the smallest rectangular frame PR which accommodates the set of parked vehicle contour lines VL is a parking row. Also, in the case where, as shown in FIGS. 13(A) and 13(B), the number of successive parking slots PL and parked vehicle contour lines VL present in a mixed manner is equal to or greater than the first threshold number (in the example shown in the drawing, a combination of three parking slots PL and two parked vehicle contour lines VL), the parking row determination section 13A determines that the smallest rectangular frame PR which accommodates the set of parking slots PL and parked vehicle contour lines VL is a parking row.

As described above, in the case where the number of successive parking slots PL, the number of successive parked vehicle contour lines VL, or the number of successive parking slots PL and parked vehicle contour lines VL is equal to or greater than the first threshold number, the set of parking slots PL and/or parked vehicle contour lines VL is determined as a parking row. Thus, it becomes possible to effectively prevent erroneous determination, as a parking row, of road markings (e.g., stop lines and pedestrian crossings) drawn on the surfaces of ordinary roads or other vehicles stopping around the own vehicle 100 because of, for example, waiting for a traffic light to change.

The parking row determination section 13A extracts the rectangular frame PR defining the parking row from the image data and obtains pieces of information representing the positions of straight lines PR1 to PR4 forming the extracted rectangular frame PR in relation to the own vehicle 100 (for example, the coordinates in the x-y plane coordinate system whose origin coincides with the position of the own vehicle 100). Also, the parking row determination section 13A transmits the pieces of information representing the positions of the obtained straight lines PR1 to PR4 to the parking lot staying determination section 16 at predetermined intervals. Notably, in the following description, of the straight lines PR1 to PR4 forming the rectangular frame PR, the straight line PR1 facing the corridor R will be referred to as a front-side parking row line, and the straight line PR2 which is parallel to the front-side parking row line PR1 and is farther away from the corridor R than the front-side parking row line PR1 will be referred to as a rear-side parking row line. Also, a straight line PR3 which perpendicularly intersects with the front-side parking row line PR1 and the rear-side parking row line PR2 and is located on the left side as viewed from the corridor R side will be referred to as a left-side parking row line, and a straight line PR4 which perpendicularly intersects with the front-side parking row line PR1 and the rear-side parking row line PR2 and is located on the right side as viewed from the corridor R side will be referred to as a right-side parking row line.

Referring back to FIG. 1, the travel path prediction section 15 computes a predicted travel path of the own vehicle 100 on the basis of the travel state of the own vehicle 100 obtained by the vehicle state obtainment apparatus 30. Herein, the predicted travel path refers to a locus along which the own vehicle 100 is predicted to travel when the current travel state of the own vehicle 100 is maintained. The predicted travel path can be computed, for example, on the basis of the vehicle speed V detected by the vehicle speed sensor 31, the steering angle detected by the steering angle sensor 34, etc. The travel path prediction section 15 transmits the computed predicted travel path to the parking lot staying determination section 16 at predetermined intervals.

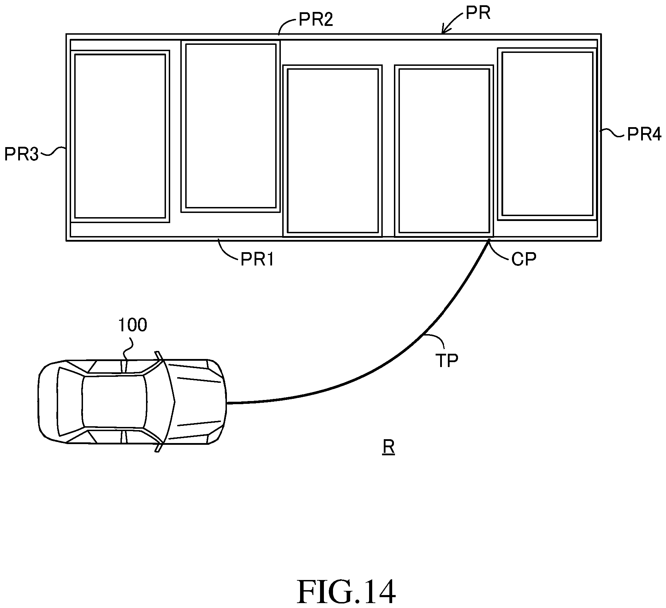

The parking lot staying determination section 16 determines whether or not the own vehicle 100 is present in the parking lot P on the basis of the piece of information transmitted from the parking row determination section 13A and representing the position of the parking row (the rectangular frame PR) in relation to the own vehicle 100 and the piece of information transmitted from the travel path prediction section 15 and representing a predicted travel path of the own vehicle 100. FIG. 14 is a schematic top view which shows a parking row and the own vehicle 100 travelling in a corridor R in a parking lot P. The parking lot staying determination section 16 first determines whether or not the predicted travel path TP of the own vehicle 100 intersects with the front-side parking row line PR1 of the rectangular frame PR which defines the parking row. In the case where the parking lot staying determination section 16 determines that the predicted travel path TP intersects with the front-side parking row line PR1, the parking lot staying determination section 16 computes a predicted reaching time TA necessary for the own vehicle 100 at the present position to reach an intersecting position CP where the predicted travel path TP intersects with the front-side parking row line PR1. The predicted reaching time TA may be obtained by, for example, dividing the distance D from the present position of the own vehicle 100 to the intersecting position CP along the predicted travel path TP by the current speed V of the own vehicle 100 (TA = D/V). In the case where the computed, predicted reaching time TA is equal to or shorter than a predetermined threshold time (for example, a few seconds), the parking lot staying determination section 16 determines that the own vehicle 100 is present in the parking lot P.

In the case where the parking lot staying determination section 16 determines that the own vehicle 100 is present in the parking lot P, the erroneous operation determination section 17 determines whether or not the driver of the own vehicle 100 has performed an erroneous accelerator operation; i.e., has erroneously stepped on the accelerator pedal. Specifically, in the case where all the following conditions (1) to (5) are satisfied, the erroneous operation determination section 17 determines that the driver has erroneously operated the accelerator pedal. Meanwhile, in the case where at least one of the conditions (1) to (5) is not satisfied, the erroneous operation determination section 17 determines that the accelerator pedal has not been erroneously operated by the driver.
(1) The speed V of the own vehicle 100 is lower than a predetermined threshold vehicle speed V_{Min}.
(2) The accelerator pedal operation amount AP is equal to or greater than a predetermined threshold operation amount AP_{Max}.
(3) The accelerator pedal operation speed APV is equal to or higher than a predetermined threshold operation speed APV_{Max}.
(4) The brake is not operated.
(5) The blinker is not operated.

As to the condition (1), it is sufficient that determination is made on the basis of the result of detection by the vehicle speed sensor 31. Although no particular limitation is imposed on the threshold vehicle speed V_{Min}, it is sufficient to set in a range of, for example, 10 to 15 km/h on the basis of the typical vehicle speed at the time when the vehicle travels in the corridor R in the parking lot P. As to the conditions (2) and (3), it is sufficient that determination is made on the basis of the result of detection by the accelerator sensor 32. As to the accelerator pedal operation speed APV of the condition (3), it is sufficient to obtain the accelerator pedal operation speed APV by dividing, by time, the accelerator pedal operation amount AP obtained by the accelerator sensor 32. As to the condition (4), it is sufficient that determination is made on the basis of the result of detection by the brake sensor 33. As to the condition (5), it is sufficient that determination is made on the basis of the ON/OFF signal of the blinker switch 35. Notably, the conditions for determining the erroneous operation of the accelerator pedal are not limited to the above-described conditions (1) to (5), and any of the conditions (1) to (5) may be omitted or other conditions may be added.

In the case where the erroneous operation determination section 17 determines that the driver has erroneously operated the accelerator pedal, the driving power reduction control section 18 executes driving power reduction control which controls the operation of the drive apparatus 20 such that the actual acceleration GA of the own vehicle 100 becomes equal to or lower than a predetermined upper limit acceleration G_{Max}. The upper limit acceleration G_{Max} may be a constant value or may be set to become smaller as the vehicle speed V increases. When the accelerator pedal operation amount AP decreases to a predetermined end threshold value APE or less after start of the driving power reduction control, the driving power reduction control section 18 ends the driving power reduction control (cancels the limitation by the upper limit acceleration G_{Max}). As described above, safety is enhanced by executing the driving power reduction control for reducing the actual acceleration GA of the own vehicle 100 to the upper limit acceleration G_{Max} or lower when the driver has erroneously operated the accelerator pedal in the parking lot P.

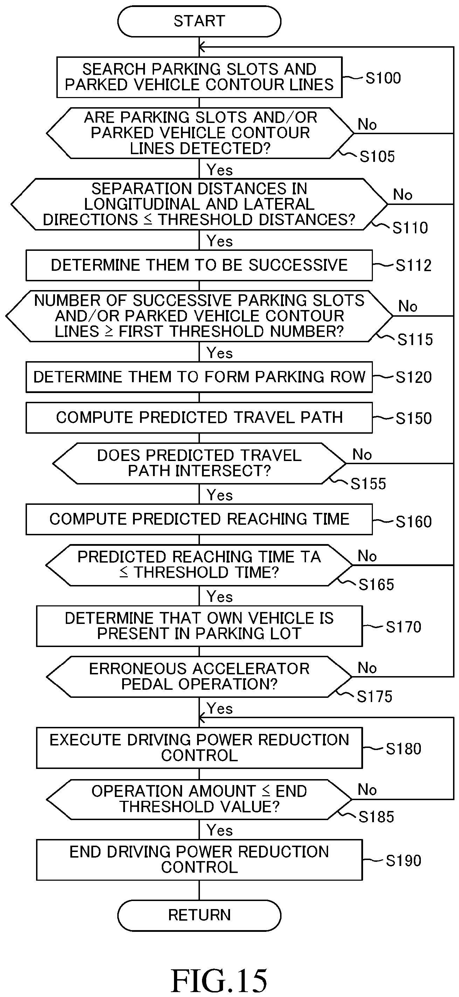

Next, a routine of a process for parking row determination, parking lot staying determination, and driving power reduction control performed by the ECU 10 will be described on the basis of the flowchart shown in FIG. 15. When an ignition switch or a start button of the vehicle 100 is operated to an ON state, the ECU 10 repeatedly executes, at predetermined intervals, a process of step S100 and subsequent steps of FIG. 15. Notably, the ECU 10 may execute the process of step S100 and steps subsequent thereto when the speed V of the vehicle 100 is equal to or less than a predetermined threshold speed.

In step S100, the ECU 10 searches a parking slot(s) PL and a parked vehicle contour line(s) VL around the own vehicle 100 on the basis of image data (i.e., data of the image captured by the camera sensor 41).

Next, in step S105, the ECU 10 determines whether or not at least either of a parking slot(s) PL and a parked vehicle contour line(s) VL has been obtained from the image data. In the case where at least either of a parking slot(s) PL and a parked vehicle contour line(s) VL has been obtained (Yes), the ECU 10 proceeds to step S110. Meanwhile, in the case where neither of a parking slot(s) PL and a parked vehicle contour line(s) VL has been obtained (No), the ECU 10 returns to step S100 so as to continue the searching of a parking slot(s) PL and a parked vehicle contour line(s) VL.

In step S110, the ECU 10 determines whether or not the separation distances in the longitudinal direction and the lateral direction between the parking slot(s) PL and/or the parked vehicle contour line(s) VL located adjacent to each other are equal to or less than a predetermined threshold value. Specifically, in the case where a plurality of parking slots PL located adjacent to each other were able to be obtained, the ECU 10 determines whether or not the first condition (the separation distance DH1 in the longitudinal direction between the parking slots PL located adjacent to each other is equal to or less than the first threshold value) and the second condition (the separation distance DH2 in the lateral direction between the parking slots PL is equal to or less than the second threshold value) are satisfied. Also, in the case where parked vehicle contour lines VL located adjacent to each other were able to be obtained, the ECU 10 determines whether or not the third condition (the separation distance DH3 in the longitudinal direction between the parked vehicle contour lines VL located adjacent to each other is equal to or less than the third threshold value) and the fourth condition (the separation distance DH4 in the lateral direction between the parked vehicle contour lines VL is equal to or less than the fourth threshold value) are satisfied. Also, in the case where a parking slot PL and a parked vehicle contour line VL located adjacent to each other were able to be obtained, the ECU 10 determines whether or not the fifth condition (the separation distance DH3 in the longitudinal direction between the parking slot PL and the parked vehicle contour line VL located adjacent to each other is equal to or less than the fifth threshold value) and the sixth condition (the separation distance DH4 in the lateral direction between the parking slot PL and the parked vehicle contour line VL is equal to or less than the sixth threshold value) are satisfied. In the case where the above condition is satisfied (Yes), the ECU 10 proceeds to step S112 to determine that the parking slot(s) PL and/or the parked vehicle contour line(s) VL located adjacent to each other are successive, and proceeds to step S115. Meanwhile, in the case where the ECU 10 determines in step S110 that the above condition is not satisfied (No) or the case where a parking slot(s) PL and a parked vehicle contour line(s) VL located adjacent to each other were not able to be obtained, the ECU 10 returns to step S100 so as to continue the searching of a parking slot(s) PL and a parked vehicle contour line(s) VL.

In step S115, the ECU 10 determines whether or not the number of successive parking slots PL, the number of successive parked vehicle contour lines VL, or the number of successive parking slots PL and parked vehicle contour lines VL is equal to or greater than the first threshold number. In the case where the above condition is satisfied (Yes), the ECU 10 proceeds to step S120 so as to determine that they form a parking row and obtain a piece of information representing the position of a rectangular frame PR which defines the parking row, and then proceeds to step S50. Meanwhile, in the case where the ECU 10 determines in step S115 that the above condition is not satisfied (No), the ECU 10 returns to step S100 so as to continue the searching of a parking slot(s) PL and a parked vehicle contour line(s) VL.

In step S150, the ECU 10 computes a predicted travel path TP of the own vehicle 100 on the basis of the vehicle speed V obtained by the vehicle speed sensor 31 and the steering angle obtained by the steering angle sensor 34. Subsequently, in step S155, the ECU 10 determines whether or not the computed predicted travel path TP intersects with the front-side parking row line PR1 of a rectangular frame PR which defines a parking row. In the case where the computed predicted travel path TP intersects with the front-side parking row line PR1 (Yes), the ECU 10 proceeds to step S160. Meanwhile, in the case where the computed predicted travel path TP does not intersect with the front-side parking row line PR1 (No), the ECU 10 returns to step S100 so as to continue the searching of a parking slot(s) PL and a parked vehicle contour line(s) VL.

In step S160, the ECU 10 computes a predicted reaching time TA necessary for the own vehicle 100 at the present position to reach an intersecting position CP where the predicted travel path TP intersects with the front-side parking row line PR1. Subsequently, in step S165, the ECU 10 determines whether or not the predicted reaching time TA is equal to or shorter than the predetermined threshold time. In the case where the predicted reaching time TA is equal to or shorter than the predetermined threshold time (Yes), the ECU 10 proceeds to step S170. Meanwhile, in the case where the predicted reaching time TA is not equal to or shorter than the predetermined threshold time (No), the ECU 10 returns to step S100 so as to continue the searching of a parking slot(s) PL and a parked vehicle contour line(s) VL.

In step S170, the ECU 10 determines that the own vehicle 100 is present in the parking lot P. Subsequently, in step S175, the ECU 10 determines whether or not the driver has performed an erroneous operation; i.e., erroneously stepped on the accelerator pedal. In the case where all the above-described conditions (1) to (5) are satisfied (Yes), the ECU 10 determines that the accelerator pedal has been erroneously operated by the driver and proceeds to step S180. Meanwhile, in the case where at least one of the above-described conditions (1) to (5) is not satisfied (No), the ECU 10 returns to step S100 so as to continue the searching of a parking slot(s) PL and a parked vehicle contour line(s) VL.

In step S180, the ECU 10 executes the driving power reduction control for controlling the operation of the drive apparatus 20 such that the actual acceleration GA of the own vehicle 100 becomes equal to or lower than the predetermined upper limit acceleration G_{Max}. Subsequently, in step S185, the ECU 10 determines whether or not the accelerator pedal operation amount AP has decreased to the end threshold value APE or less. In the case where the accelerator pedal operation amount AP has not decreased to the end threshold value APE or less (No), the ECU 10 returns to step S180 so as to continue the driving power reduction control. Meanwhile, in the case where the accelerator pedal operation amount AP has decreased to the end threshold value APE or less (Yes), the ECU 10 proceeds to step S190 so as to end the driving power reduction control and then ends the present routine for the time being. After that, the ECU 10 repeatedly executes the processes of the above-described steps S100 to S190 until the ignition switch or the start button of the vehicle 100 is operated to an OFF state.

According to the first embodiment having been described in detail, in the case where the separation distances in the longitudinal direction and the lateral direction between the parking slot(s) PL and/or the parked vehicle contour line(s) VL located adjacent to each other are equal to or less than a predetermined threshold value, they are determined to be successive, and, in the case where the number of successive parking slots PL, the number of successive parked vehicle contour lines VL, or the number of successive parking slots PL and parked vehicle contour lines VL is equal to or greater than a first threshold number (for example, 5), a smallest rectangular frame PR which accommodates them is determined as a parking row. Thus, it is possible to effectively prevent erroneous determination, as a parking row, of road markings (e.g., stop lines and pedestrian crossings) drawn on the surfaces of ordinary roads or other vehicles stopping around the own vehicle 100 because of, for example, waiting for a traffic light to change. Also, use of the parking row determined in this manner makes it possible to accurately determine whether or not the own vehicle 100 is present in the parking lot P. Also, in the case where the predicted travel path TP of the own vehicle 100 intersects with the rectangular frame PR which defines the parking row; in other words, in the case where the own vehicle 100 is highly likely to enter the parking row PR, the own vehicle 100 is determined to be present in the parking lot P, and the driving power reduction control is enabled, whereby it becomes possible to enhance safety without fail, while effectively preventing unnecessary performance of the driving power reduction control on ordinary roads or the like.

### [Second embodiment]

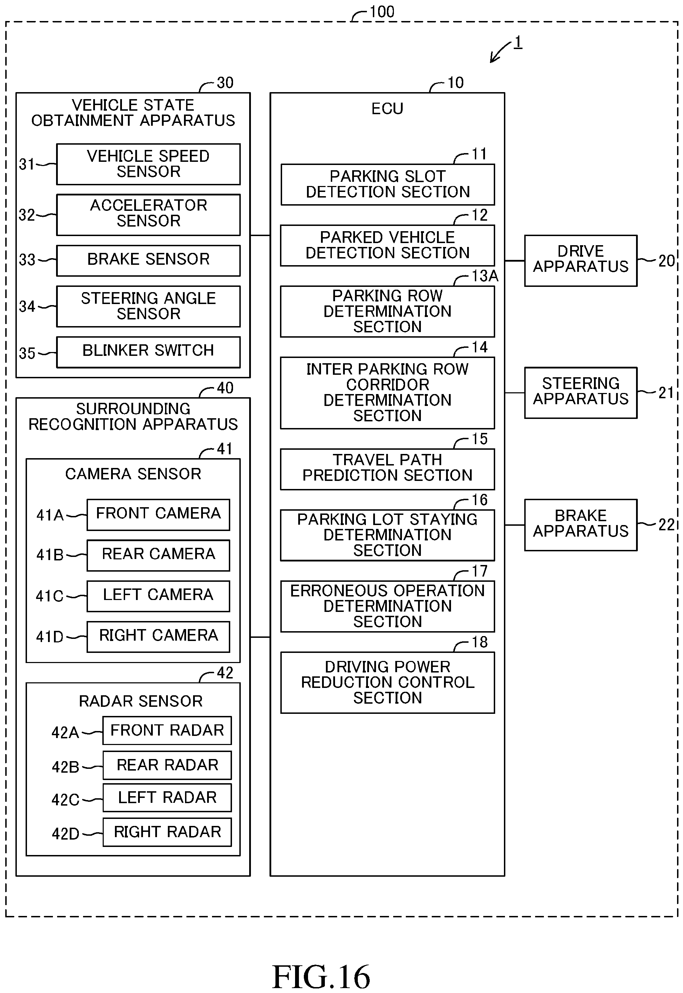

Next, a driving assistant apparatus, a driving assistant method, and a program according to a second embodiment will now be described. FIG. 16 is a schematic overall configuration diagram of a driving assistant apparatus 1 according to the second embodiment. The driving assistant apparatus 1 of the second embodiment is obtained by adding an inter parking row corridor determination section 14 to the ECU 10 of the first embodiment as a functional element. Components which are identical to those of the first embodiment are denoted by the same reference symbols, and they have the same functions. Therefore, their detailed description will not be repeated.

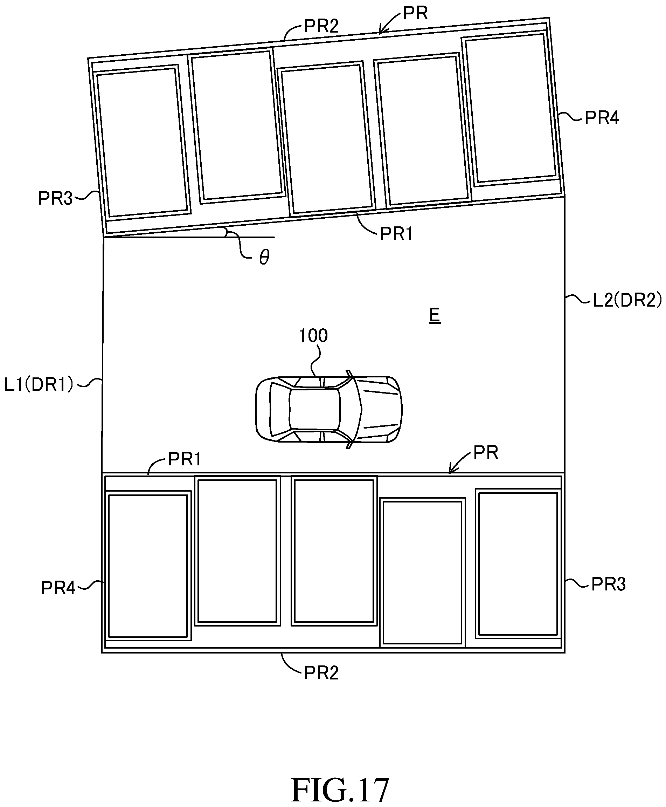

In the case where a pair of parking rows are recognized around the own vehicle 100 and face each other in the longitudinal direction with the own vehicle 100 intervening therebetween, the inter parking row corridor determination section 14 determines whether or not the area between rectangular frames PR which define these parking rows is an inter parking row corridor. FIG. 17 is a schematic diagram showing a top view of a pair of parking rows facing each other with a space in the longitudinal direction therebetween. Notably, in the example shown in FIG. 17, it is assumed that the lengths of the front-side parking row lines PR1 of rectangular frames PR which define the pair of parking rows are approximately equal to each other.

The inter parking row corridor determination section 14 first computes the angle Θ between straight lines PR1 and PR2 which are those among the straight lines PR1 to PR4 of the rectangular frames PR defining the parking rows facing each other and which extend in the lengthwise direction (preferably, the angle between the front-side parking row lines PR1). Also, the inter parking row corridor determination section 14 computes the separation distances in the longitudinal direction between the parking rows facing each other. Specifically, the inter parking row corridor determination section 14 computes, as separation distances DR1 and DR2, the lengths of straight lines L1 and L2 which connect opposite ends of the front-side parking row lines PR1 facing each other; in other words, the straight lines L1 and L2 which connect corner portions of the rectangular frames PR, the corner portions being located on the side where the rectangular frames PR face each other.

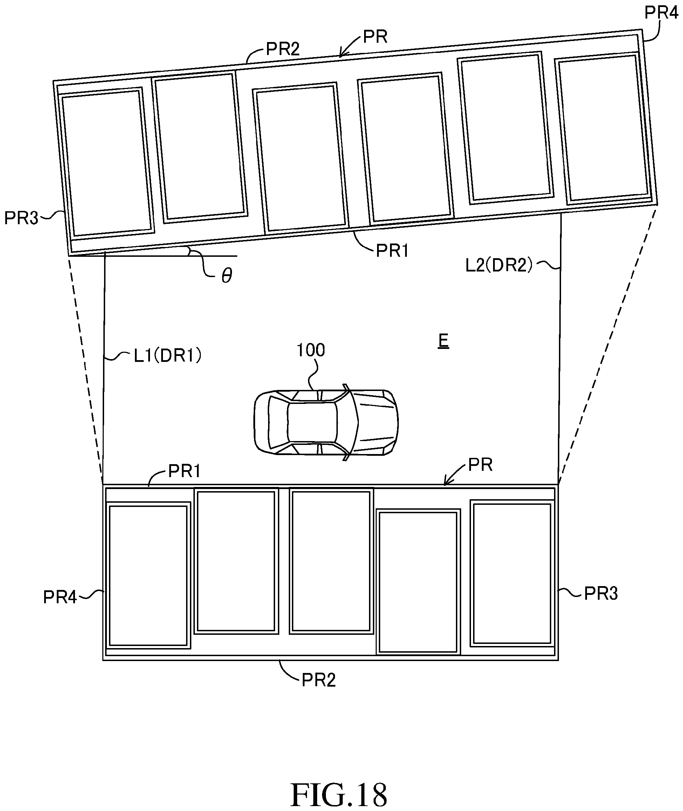

Notably, in the case where, as shown in FIG. 18, the difference between the length of the front-side parking row line PR1 of one rectangular frame PR and the length of the front-side parking row line PR1 of the other rectangular frame PR is large, straight lines which connect respective corner portions (see broken lines) become long. In such a case, the inter parking row corridor determination section 14 computes, as the separation distances DR1 and DR2, distances between end portions of the shorter front-side parking row line PR1 and points at which straight lines L1 and L2 extending approximately perpendicularly from the end portions intersect with the longer front-side parking row line PR1.

In the case where the computed angle θ is equal to or less than a predetermined threshold angle θV and both the computed separation distances DR1 and DR2 are equal to or less than a predetermined distance threshold value DRV, the inter parking row corridor determination section 14 determines, as a corridor located between parking rows (namely, an inter parking row corridor), an area E which is surrounded by the front-side parking row lines PR1 facing each other and the straight lines connecting the end portions of these front-side parking row lines PR1 facing each other. Here, no particular limitation is imposed on the threshold angle θV, and it is sufficient that the threshold angle θV is set on the basis of an angle (for example, 10° or less) determined such that the front-side parking row lines PR1 facing each other can be considered to be approximately parallel to each other. The threshold angle θV may be a fixed value or a variable value which changes in accordance with the lengths of the front-side parking row lines PR1. Also, no particular limitation is imposed on the distance threshold value DRV, and it is sufficient that the distance threshold value DRV is set on the basis of a distance (for example, about 8 to 10 m) determined such that, in the case where parking rows facing each other with an ordinary road intervening therebetween are detected when the own vehicle 100 is traveling on the ordinary road, the ordinary road on which the own vehicle 100 is traveling is not erroneously determined as an inter parking row corridor.

In the case where the inter parking row corridor determination section 14 determines that the area between the parking rows is an inter parking row corridor and the own vehicle 100 is located in the area E, the parking lot staying determination section 16 determines that the own vehicle 100 is present in the parking lot P. As described above, in the case where the own vehicle 100 is located in the area E between the parking rows facing each other, the own vehicle 100 is determined to be present in the parking lot P. Thus, it becomes possible to effectively activate the driving power reduction control even in the case where the above-described predicted travel path TP does not intersect with the front-side parking row line PR1 in a parking lot in which parking rows are provided on opposite sides of a corridor R; for example, a parking lot of a large store or the like.

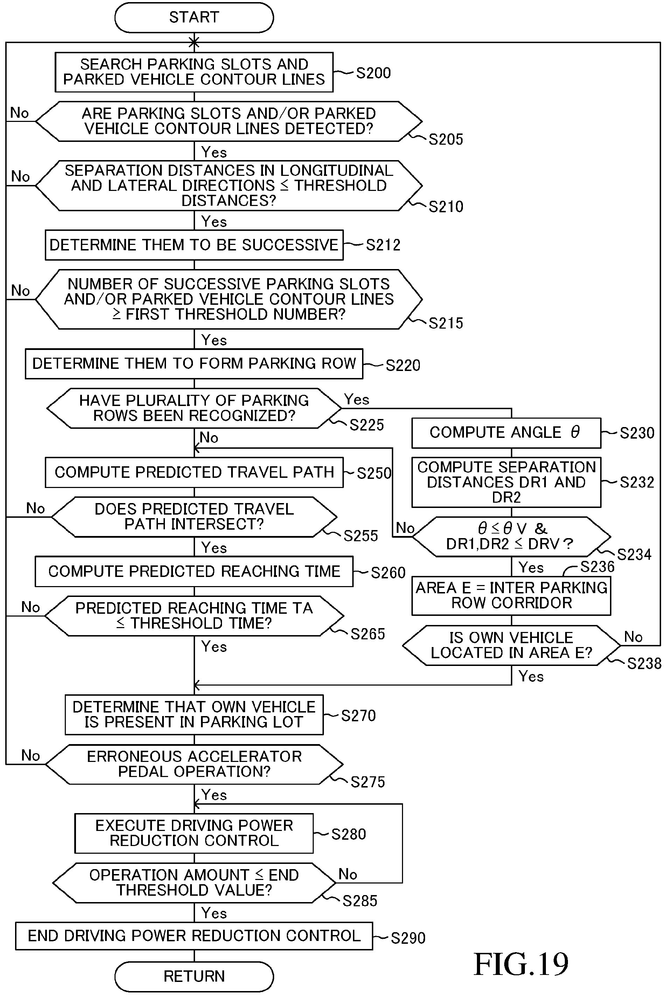

Next, a routine of a process for parking row determination, parking lot staying determination, and driving power reduction control performed by the ECU 10 according to the second embodiment will be described on the basis of the flowchart shown in FIG. 19.

In step S200, the ECU 10 searches a parking slot(s) PL and a parked vehicle contour line(s) VL around the own vehicle 100 on the basis of image data (i.e., data of the image captured by the camera sensor 41).

Next, in step S205, the ECU 10 determines whether or not at least either of a parking slot(s) PL and a parked vehicle contour line(s) VL was able to be obtained from the image data. In the case where at least either of a parking slot(s) PL and a parked vehicle contour line(s) VL was able be obtained (Yes), the ECU 10 proceeds to step S210. Meanwhile, in the case where neither of a parking slot(s) PL and a parked vehicle contour line(s) VL can be obtained (No), the ECU 10 returns to step S200 so as to continue the searching of a parking slot(s) PL and a parked vehicle contour line(s) VL.

In step S210, the ECU 10 determines whether or not the separation distances in the longitudinal direction and the lateral direction between the parking slot(s) PL and/or the parked vehicle contour line(s) VL located adjacent to each other are equal to or less than a predetermined threshold value. Since a specific process is the same as that of the above-described step S110 (see FIG. 15), its description will not be repeated. In the case where the above condition is satisfied (Yes), the ECU 10 proceeds to step S212 to determine that the parking slot(s) PL and/or the parked vehicle contour line(s) VL located adjacent to each other are successive, and proceeds to step S215. Meanwhile, in the case where the ECU 10 determines in step S210 that the above condition is not satisfied (No), the ECU 10 returns to step S200 so as to continue the searching of a parking slot(s) PL and a parked vehicle contour line(s) VL.

In step S215, the ECU 10 determines whether or not the number of successive parking slots PL, the number of successive parked vehicle contour lines VL, or the number of successive parking slots PL and parked vehicle contour lines VL is equal to or greater than the first threshold number. In the case where the above condition is satisfied (Yes), the ECU 10 proceeds to step S220 so as to determine that they form a parking row and obtain a piece of information representing the position of a rectangular frame PR which defines the parking row, and then proceeds to step S225. Meanwhile, in the case where the ECU 10 determines in step S215 that the above condition is not satisfied (No), the ECU 10 returns to step S200 so as to continue the searching of a parking slot(s) PL and a parked vehicle contour line(s) VL.

In step S225, the ECU 10 determines whether or not a plurality of parking rows (rectangular frames PR) facing each other have been recognized. In the case where a plurality of rectangular frames PR have been recognized (Yes), the ECU 10 proceeds to step S230. In step S230, the ECU 10 computes the angle θ between the straight lines extending in the lengthwise direction (front-side parking row lines PR1) of rectangular frames PR which define the parking rows facing each other. Subsequently, in step S232, the ECU 10 computes the separation distances DR1 and DR2 of the rectangular frames PR which define the parking rows facing each other (the lengths of the straight lines L1 and L2 connecting the end portions of the front-side parking row lines PR1). Notably, the processes of step S230 and step S232 may be performed in any order.

In step S234, the ECU 10 determines whether or not two conditions are satisfied; i.e., the condition that the angle θ computed in step S230 is equal to or less than the predetermined threshold angle θV and the condition that both the separation distances DR1 and DR2 computed in step S232 are equal to or less than the predetermined distance threshold value DRV. In the case where at least one of the two conditions is not satisfied (No), the ECU 10 proceeds to step S250. Meanwhile, in the case where both the two conditions are satisfied (Yes), the ECU 10 proceeds to step S236 and determines, as an inter parking row corridor, the area E surrounded by the front-side parking row lines PR1 facing each other and the straight lines L1 and L2 which connect the end portions of these front-side parking row lines PR1 facing each other. Subsequently, the ECU 10 proceeds to step S238.

In step S238, the ECU 10 determines whether or not the own vehicle 100 is located in the area E. In the case where the own vehicle 100 is located in the area E (Yes), the ECU 10 proceeds to step 270, which will be described later. Meanwhile, in the case where the own vehicle 100 is not located in the area E (No), the ECU 10 returns to step S200 so as to continue the searching of a parking slot(s) PL and a parked vehicle contour line(s) VL.

In the case where the ECU 10 determines in step 225 that a plurality of rectangular frames PR have not been recognized (No); i.e., the case where only one rectangular frame PR has been recognized, the ECU 10 proceeds to step S250. In step S250, the ECU 10 computes a predicted travel path TP of the own vehicle 100 on the basis of the vehicle speed V obtained by the vehicle speed sensor 31 and the steering angle obtained by the steering angle sensor 34. Subsequently, in step S255, the ECU 10 determines whether or not the computed predicted travel path TP intersects with the front-side parking row line PR1 of a rectangular frame PR which defines a parking row. In the case where the computed predicted travel path TP intersects with the front-side parking row line PR1 (Yes), the ECU 10 proceeds to step S260. Meanwhile, in the case where the computed predicted travel path TP does not intersect with the front-side parking row line PR1 (No), the ECU 10 returns to step S200 so as to continue the searching of a parking slot(s) PL and a parked vehicle contour line(s) VL.

In step S260, the ECU 10 computes a predicted reaching time TA necessary for the own vehicle 100 at the present position to reach an intersecting position CP where the predicted travel path TP intersects with the front-side parking row line PR1. Subsequently, in step S265, the ECU 10 determines whether or not the predicted reaching time TA is equal to or shorter than the predetermined threshold time. In the case where the predicted reaching time TA is equal to or shorter than the predetermined threshold time (Yes), the ECU 10 proceeds to step S270. Meanwhile, in the case where the predicted reaching time TA is not equal to or shorter than the predetermined threshold time (No), the ECU 10 returns to step S200 so as to continue the searching of a parking slot(s) PL and a parked vehicle contour line(s) VL.

In step S270, the ECU 10 determines that the own vehicle 100 is present in the parking lot. Subsequently, in step S275, the ECU 10 determines whether or not the driver has performed an erroneous operation; i.e., erroneously stepped on the accelerator pedal. In the case where all the above-described conditions (1) to (5) are satisfied (Yes), the ECU 10 determines that the accelerator pedal has been erroneously operated by the driver and proceeds to step S280. Meanwhile, in the case where at least one of the above-described conditions (1) to (5) is not satisfied (No), the ECU 10 returns to step S200 so as to continue the searching of a parking slot(s) PL and a parked vehicle contour line(s) VL.

In step S280, the ECU 10 executes the driving power reduction control for controlling the operation of the drive apparatus 20 such that the actual acceleration GA of the own vehicle 100 becomes equal to or lower than the upper limit acceleration G_{Max}. Subsequently, in step S285, the ECU 10 determines whether or not the accelerator pedal operation amount AP has decreased to the end threshold value APE or less. In the case where the accelerator pedal operation amount AP has not decreased to the end threshold value APE or less (No), the ECU 10 returns to step S280 so as to continue the driving power reduction control. Meanwhile, in the case where the accelerator pedal operation amount AP has decreased to the end threshold value APE or less (Yes), the ECU 10 proceeds to step S290 so as to end the driving power reduction control and then ends the present routine for the time being. After that, the ECU 10 repeatedly executes the processes of the above-described steps S200 to S290 until the ignition switch or the start button of the vehicle 100 is operated to an OFF state.

According to the second embodiment having been described in detail, in the case where a plurality of parking rows facing each other with a corridor R intervening therebetween have been recognized on opposite sides of the own vehicle 100 and these parking rows have a predetermined positional relation, the area E between these parking rows is determined as an inter parking row corridor. Also, in the case where the own vehicle 100 is located in the area E, the ECU 10 determines that the own vehicle 100 is present in the parking lot P irrespective of whether or not the predicted travel path TP intersects with the parking rows. Thus, even in the case where the predicted travel path TP of the own vehicle 100 does not intersect with a parking row in a parking lot in which parking rows are provided on opposite sides of a corridor R (for example, a parking lot of a large store or the like), it is possible to accurately determines that the own vehicle 100 is present in the parking lot P and effectively activate the driving power reduction control in the parking lot P, thereby enhancing safety without fail.

### [Third embodiment]

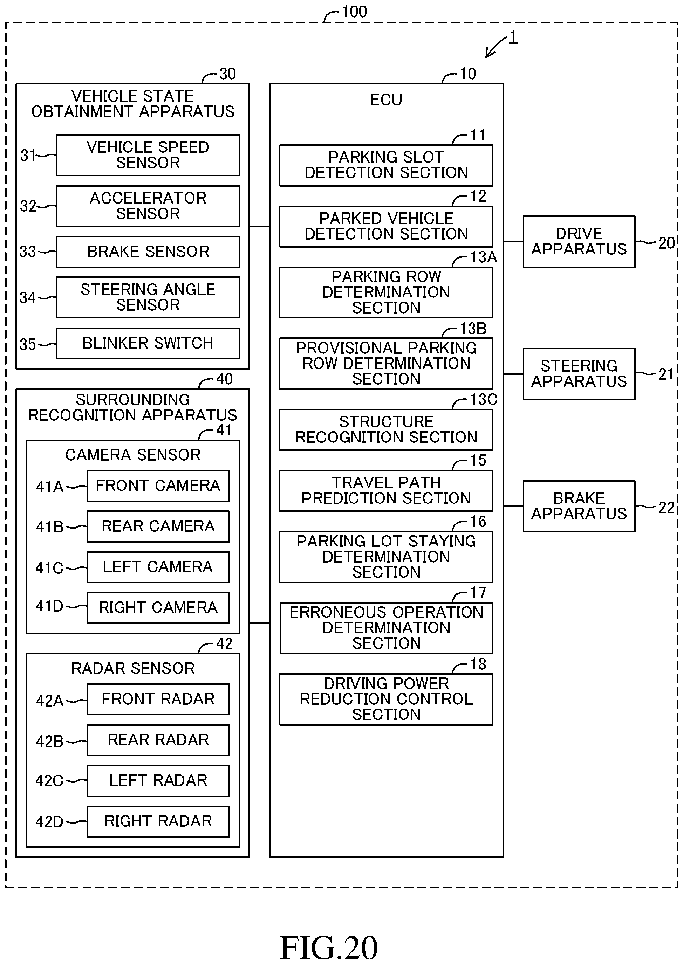

Next, a driving assistant apparatus, a driving assistant method, and a program according to a third embodiment will be described. FIG. 20 is a schematic overall configuration diagram of a driving assistant apparatus 1 according to the third embodiment. The driving assistant apparatus 1 of the third embodiment is obtained by adding a provisional parking row determination section 13B and a structure recognition section 13C to the ECU 10 of the first embodiment as functional elements. Components which are identical to those of the first embodiment are denoted by the same reference symbols, and they have the same functions. Therefore, their detailed description will not be repeated.

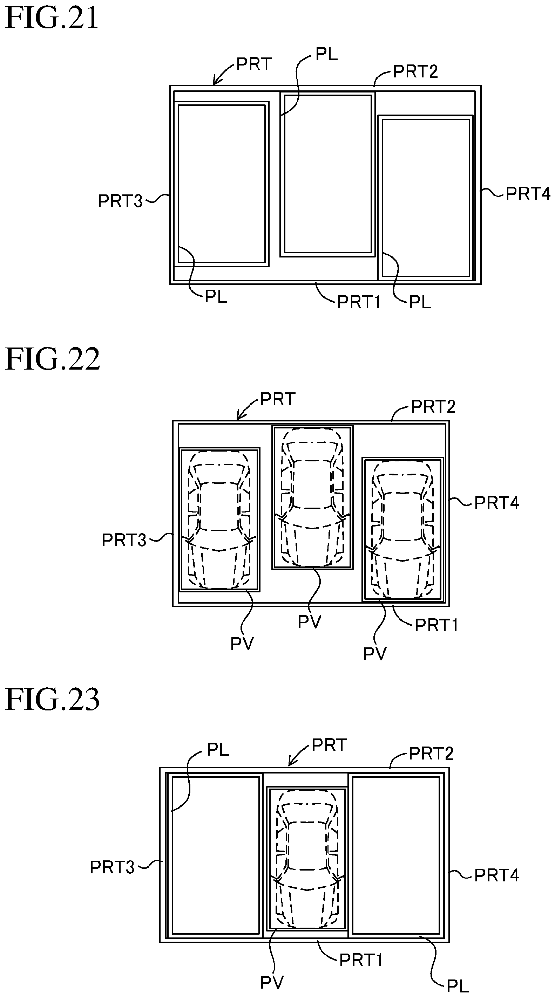

Even in the case where the number of successive parking slots PL, the number of successive parked vehicle contour lines VL, or the number of successive parking slots PL and parked vehicle contour lines VL located in a random order is less than the above-described first threshold number (for example, 5), the provisional parking row determination section 13B determines that they form a provisional parking row if the number of successive parking slots PL and/or parked vehicle contour lines VL is a predetermined second threshold number (for example, 3 or greater). Specifically, in the case where, as shown in FIG. 21, the number of successive parking slots PL is less than the first threshold number and is equal to or greater than the second threshold number (in the example shown in the drawing, three parking slots PL), the provisional parking row determination section 13B determines, as a provisional parking row, the smallest provisional rectangular frame PRT which accommodates the set of parking slots PL. Also, in the case where, as shown in FIG. 22, the number of successive parked vehicle contour lines VL is less than the first threshold number and is equal to or greater than the second threshold number (in the example shown in the drawing, three parked vehicle contour lines VL), the provisional parking row determination section 13B determines, as a provisional parking row, the smallest provisional rectangular frame PRT which accommodates the set of parked vehicle contour lines VL. Also, in the case where, as shown in FIG. 23, the number of a parking slot(s) PL and a parked vehicle contour line(s) VL located in succession is less than the first threshold number and is equal to or greater than the second threshold number (in the example shown in the drawing, a combination of two parking slots PL and one parked vehicle contour line VL), the provisional parking row determination section 13B determines, as a provisional parking row, the smallest provisional rectangular frame PRT which accommodates the set of parking slots PL and parked vehicle contour lines VL.

The provisional parking row determination section 13B extracts the provisional rectangular frame PRT defining the provisional parking row from the image data and obtains pieces of information representing the positions of straight lines PRT1 to PRT4 forming the extracted provisional rectangular frame PRT in relation to the own vehicle 100 (for example, the coordinates in the x-y plane coordinate system whose origin coincides with the position of the own vehicle 100). Also, the provisional parking row determination section 13B transmits the pieces of information representing the positions of the obtained straight lines PRT1 to PRT4 to the parking row determination section 13A at predetermined intervals. In the following description, of the straight lines PRT1 to PRT4 which form the provisional rectangular frame PRT, the straight line PRT1 which faces the corridor R will be referred to as a front-side provisional parking row line, and the straight line PRT2 which is parallel to the front-side provisional parking row line PRT1 and is farther away from the corridor R than the front-side provisional parking row line PRT1 will be referred to as a rear-side provisional parking row line. Also, a straight line PRT3 which perpendicularly intersects with the front-side provisional parking row line PRT1 and the rear-side provisional parking row line PRT2 and is located on the left side as viewed from the corridor R side will be referred to as a left-side provisional parking row line, and a straight line PRT4 which perpendicularly intersects with the front-side provisional parking row line PRT1 and the rear-side provisional parking row line PRT2 and is located on the right side as viewed from the corridor R side will be referred to as a right-side provisional parking row line.

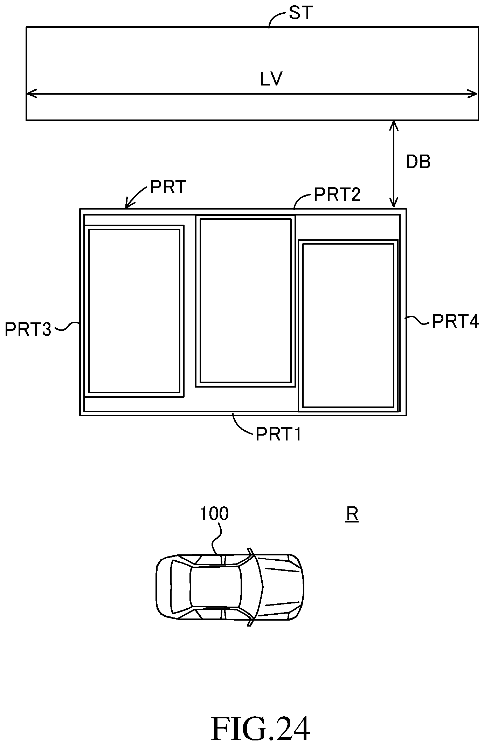

The structure recognition section 13C obtains, on the basis of the result of detection by the surrounding recognition apparatus 40, a piece of information representing the position of a structure (a building or the like) present in an area located rearward of the provisional rectangular frame PR. Specifically, as shown in FIG. 24, the structure recognition section 13C first determines, on the basis of the result of detection by the surrounding recognition apparatus 40, whether or not a structure ST whose length is equal to or longer than a predetermined length LV is present in the area located rearward of the provisional rectangular frame PRT. Also, when the structure recognition section 13C determines that the structure ST is present, the structure recognition section 13C obtains a separation distance DB between the structure ST and the rear-side provisional parking row line PRT2 of the provisional rectangular frame RPT. Here, the area located rearward of the provisional rectangular frame PR refers to an area on the side opposite the own vehicle 100 (or the corridor R) with respect to the provisional rectangular frame PR. Also, conceptually, the structure ST is a stationary object such as a building standing from the ground and does not include moving objects such as other vehicles. It is sufficient that the determination as to whether the structure ST is a building is made by performing machine learning (e.g., pattern matching) on the basis of data of the image captured by the camera sensor 41. Also, although no particular limitation is imposed on the predetermined length LV, it is desired that the predetermined length LV is greater than at least the length of the rear-side provisional parking row line PRT2. The structure recognition section 13C transmits the obtained separation distance DB between the structure ST and the rear-side provisional parking row line PRT2 to the parking row determination section 13A at predetermined intervals.

The parking row determination section 13A determines whether or not the provisional parking row can be considered as a parking row on the basis of the separation distance DB between the structure ST and the rear-side provisional parking row line PRT2 transmitted from the structure recognition section 13C. Specifically, in the case where the separation distance DB between the structure ST and the rear-side provisional parking row line PRT2 is equal to or less than a predetermined seventh threshold value, the parking row determination section 13A determines that the provisional parking row defined by the provisional rectangular frame PRT is a parking row. No particular limitation is imposed on the seventh threshold value, and it is sufficient that the seventh threshold value is set on the basis of a typical distance (for example, 3 to 5 m) between a building of a small store and a parking slot. As described above, even in the case of the provisional parking row in which the number of successive parking slots and/or parked vehicle contour lines is smaller than the first threshold number, if a structure ST is present in the area located rearward of the provisional parking row, the provisional parking row is considered as a parking row. Thus, it becomes possible to effectively detect a parking row even in a parking lot of, for example, a small store or the like which has a small number of parking slots.

The parking lot staying determination section 16 determines whether or not the own vehicle 100 is present in a parking lot on the basis of the piece of information transmitted from the parking row determination section 13A and representing the position of the parking row (the provisional rectangular frame PRT) in relation to the own vehicle 100 and the piece of information transmitted from the travel path prediction section 15 and representing the predicted travel path TP of the own vehicle 100. The parking lot staying determination section 16 determines whether or not the predicted travel path TP of the own vehicle 100 intersects with the front-side provisional parking row line PRT1 of the provisional rectangular frame PRT which defines the provisional parking row determined as a parking row. In the case where the parking lot staying determination section 16 determines that the predicted travel path TP intersects with the front-side provisional parking row line PRT1, the parking lot staying determination section 16 computes a predicted reaching time TA necessary for the own vehicle 100 at the present position to reach an intersecting position where the predicted travel path TP intersects with the front-side provisional parking row line PRT1. In the case where the computed, predicted reaching time TA is equal to or shorter than the predetermined threshold time, the parking lot staying determination section 16 determines that the own vehicle 100 is present in the parking lot P.

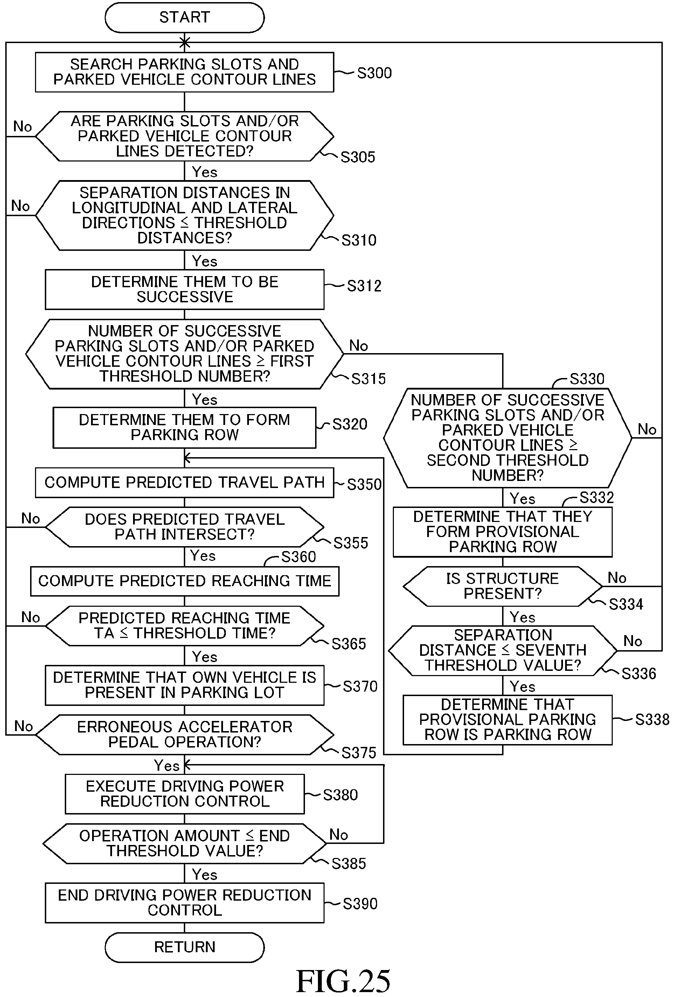

Next, a routine of a process for parking row determination, parking lot staying determination, and driving power reduction control performed by the ECU 10 according to the third embodiment will be described on the basis of the flowchart shown in FIG. 25.

In step S300, the ECU 10 searches a parking slot(s) PL and a parked vehicle contour line(s) VL around the own vehicle 100 on the basis of image data (i.e., data of the image captured by the camera sensor 41). Subsequently, in step S305, the ECU 10 determines whether or not at least either of a parking slot(s) PL and a parked vehicle contour line(s) VL was able to be obtained from the image data. In the case where at least either of a parking slot(s) PL and a parked vehicle contour line(s) VL was able be obtained (Yes), the ECU 10 proceeds to step S310. Meanwhile, in the case where neither of a parking slot(s) PL and a parked vehicle contour line(s) VL can be obtained (No), the ECU 10 returns to step S300 so as to continue the searching of a parking slot(s) PL and a parked vehicle contour line(s) VL.

In step S310, the ECU 10 determines whether or not the separation distances in the longitudinal direction and the lateral direction between the parking slot(s) PL and/or the parked vehicle contour line(s) VL located adjacent to each other are equal to or less than a predetermined threshold value. Since a specific process is the same as that of the above-described step S110 (see FIG. 15), its description will not be repeated. In the case where the above condition is satisfied (Yes), the ECU 10 proceeds to step S312 to determine that the parking slot(s) PL and/or the parked vehicle contour line(s) VL located adjacent to each other are successive, and proceeds to step S315. Meanwhile, in the case where the ECU 10 determines in step S310 that the above condition is not satisfied (No), the ECU 10 returns to step S300 so as to continue the searching of a parking slot(s) PL and a parked vehicle contour line(s) VL.

In step S315, the ECU 10 determines whether or not the number of successive parking slots PL, the number of successive parked vehicle contour lines VL, or the number of successive parking slots PL and parked vehicle contour lines VL is equal to or greater than the first threshold number. In the case where the above condition is satisfied (Yes), the ECU 10 proceeds to step S320 so as to determine that they form a parking row and obtain a piece of information representing the position of a rectangular frame PR which defines the parking row, and then proceeds to step S350. Meanwhile, in the case where the ECU 10 determines in step S315 that the above condition is not satisfied (No); namely, the number of successive parking slots PL and/or parked vehicle contour lines VL is less than the first threshold number, the ECU 10 proceeds to step S330.

In step S330, the ECU 10 determines whether or not the number of successive parking slots PL, the number of successive parked vehicle contour lines VL, or the number of successive parking slots PL and parked vehicle contour lines VL is equal to or greater than the second threshold number. In the case where the above condition is satisfied (Yes), the ECU 10 proceeds to step S332 so as to determine that they form a provisional parking row and obtain a piece of information representing the position of a provisional rectangular frame PRT which defines the provisional parking row, and then proceeds to step S334. Meanwhile, in the case where the ECU 10 determines in step S330 that the above condition is not satisfied (No); namely, the number of successive parking slots PL and/or parked vehicle contour lines VL is less than the second threshold number, the ECU 10 returns to step S300 so as to continue the searching of a parking slot(s) PL and a parked vehicle contour line(s) VL.

In step S334, the ECU 10 determines whether or not a structure ST is present in the area located rearward of the provisional rectangular frame PRT. In the case where structure ST is present (Yes), the ECU 10 proceeds to step S336. Meanwhile, in the case where the structure ST is not present, (No), the ECU 10 returns to step S300 so as to continue the searching of a parking slot(s) PL and a parked vehicle contour line(s) VL.

In step S336, the ECU 10 determines whether or not the separation distance DB between the structure ST recognized in step S334 and the rear-side provisional parking row line PRT2 of the provisional rectangular frame PRT is equal to or less than the seventh threshold value. In the case where the separation distance DB is equal to or less than the seventh threshold value (Yes), the ECU 10 proceeds to step S338 and determines that the provisional parking row is a parking row. The ECU 10 then proceeds to step S350. Meanwhile, in the case where the ECU 10 determines in step S336 that the separation distance DB is less than the seventh threshold value (No), the ECU 10 returns to step S300 so as to continue the searching of a parking slot(s) PL and a parked vehicle contour line(s) VL.

In step S350, the ECU 10 computes a predicted travel path TP of the own vehicle 100 on the basis of the vehicle speed V obtained by the vehicle speed sensor 31 and the steering angle obtained by the steering angle sensor 34. Subsequently, in step S355, the ECU 10 determines whether or not the computed predicted travel path TP intersects with the front-side parking row line PR1 of the rectangular frame PR or the front-side provisional parking row line PRT1 of the provisional rectangular frame PRT considered as a parking row. In the case where the computed predicted travel path TP intersects with the front-side parking row line PR1 or the front-side provisional parking row line PRT1 (Yes), the ECU 10 proceeds to step S360. Meanwhile, in the case where the computed predicted travel path TP does not intersect with the front-side parking row line PR1 or the front-side provisional parking row line PRT1 (No), the ECU 10 returns to step S300 so as to continue the searching of a parking slot(s) PL and a parked vehicle contour line(s) VL.

In step S360, the ECU 10 computes a predicted reaching time TA necessary for the own vehicle 100 at the present position to reach the rectangular frame PR or the provisional rectangular frame PRT. Specifically, in the case where the predicted travel path TP intersects with the front-side parking row line PR1 of the rectangular frame PR, the ECU 10 computes the predicted reaching time TA necessary for the own vehicle 100 at the present position to reach a position where the predicted travel path TP intersects with the front-side parking row line PR1. Also, in the case where the predicted travel path TP intersects with the front-side provisional parking row line PRT1 of the provisional rectangular frame PRT, the ECU 10 computes the predicted reaching time TA necessary for the own vehicle 100 at the present position to reach a position where the predicted travel path TP intersects with the front-side provisional parking row line PRT1.

Subsequently, in step S365, the ECU 10 determines whether or not the predicted reaching time TA is equal to or shorter than the predetermined threshold time. In the case where the predicted reaching time TA is equal to or shorter than the predetermined threshold time (Yes), the ECU 10 proceeds to step S370. Meanwhile, in the case where the predicted reaching time TA is not equal to or shorter than the predetermined threshold time (No), the ECU 10 returns to step S300 so as to continue the searching of a parking slot(s) PL and a parked vehicle contour line(s) VL.

In step S370, the ECU 10 determines that the own vehicle 100 is present in the parking lot P. Subsequently, in step S375, the ECU 10 determines whether or not the driver has performed an erroneous operation; i.e., erroneously stepped on the accelerator pedal. In the case where all the above-described conditions (1) to (5) are satisfied (Yes), the ECU 10 determines that the accelerator pedal has been erroneously operated by the driver and proceeds to step S380. Meanwhile, in the case where at least one of the above-described conditions (1) to (5) is not satisfied (No), the ECU 10 returns to step S300 so as to continue the searching of a parking slot(s) PL and a parked vehicle contour line(s) VL.

In step S380, the ECU 10 executes the driving power reduction control for controlling the operation of the drive apparatus 20 such that the actual acceleration GA of the own vehicle 100 becomes equal to or lower than the predetermined upper limit acceleration G_{Max}. Subsequently, in step S385, the ECU 10 determines whether or not the accelerator pedal operation amount AP has decreased to the predetermined end threshold value APE or less. In the case where the accelerator pedal operation amount AP has not decreased to the end threshold value APE or less (No), the ECU 10 returns to step S380 so as to continue the driving power reduction control. Meanwhile, in the case where the accelerator pedal operation amount AP has decreased to the end threshold value APE or less (Yes), the ECU 10 proceeds to step S390 so as to end the driving power reduction control and then ends the present routine for the time being. After that, the ECU 10 repeatedly executes the processes of the above-described steps S300 to S390 until the ignition switch or the start button of the vehicle 100 is operated to an OFF state.

According to the third embodiment having been described in detail, in the case where a provisional parking row in which the number of a parking slot(s) PL and/or a parked vehicle contour line(s) VL located in succession is equal to or greater than the second threshold number (for example, 3) and is less than the first threshold number (for example, 5) is recognized around the own vehicle 100, the ECU 10 determines that the provisional parking row is a parking row if a structure ST whose length is equal to or greater than the predetermined length is present rearward of the provisional parking row and the distance therebetween is equal to or less than the predetermined distance. Thus, it becomes possible to effectively detect a parking row even in the case of a relatively small parking lot of, for example, a small store or the like which has a small number of parking slots. Also, it becomes possible to effectively activate the driving power reduction control even in a relatively small parking lot having a small number of parking slots, thereby enhancing safety without fail.

### [Fourth embodiment]

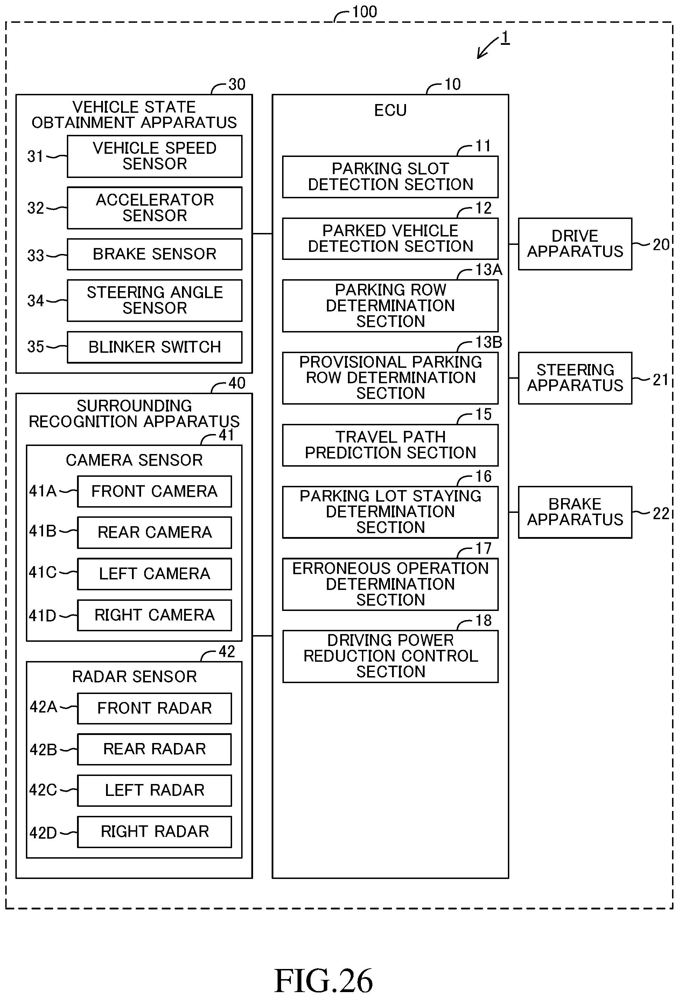

Next, a driving assistant apparatus, a driving assistant method, and a program according to a fourth embodiment will be described. FIG. 26 is a schematic overall configuration diagram of a driving assistant apparatus 1 according to the fourth embodiment. The driving assistant apparatus 1 of the fourth embodiment is obtained by adding a provisional parking row determination section 13B to the ECU 10 of the first embodiment as a functional element. Components which are identical to those of the first embodiment are denoted by the same reference symbols, and they have the same functions. Therefore, their detailed description will not be repeated.

Even in the case where the number of successive parking slots PL, the number of successive parked vehicle contour lines VL, or the number of successive parking slots PL and parked vehicle contour lines VL located in a random order is less than the above-described first threshold number (for example, 5), the provisional parking row determination section 13B determines that they form a provisional parking row if the number of a parking slot(s) PL and/or a parked vehicle contour line VL located in succession is a predetermined second threshold number (for example, 3 or greater). Notably, since the details of a specific process are the same as that of the above-described third embodiment, its detailed description will not be repeated.

Like in the case of the first embodiment, in the case where the number of successive parking slots PL, the number of successive parked vehicle contour lines VL, or the number of successive parking slots PL and parked vehicle contour lines VL located in a random order is equal to or greater than the first threshold number (for example, 5), the parking row determination section 13A determines that they form a parking row and obtains pieces of information representing the position of the smallest rectangular frame PR, which accommodates the set of successive parking slots PL and parked vehicle contour lines VL, in relation to the own vehicle 100. Also, the parking row determination section 13A determines whether or not the provisional parking row can be considered as a parking row on the basis of the piece of information representing the position of the rectangular frame PR obtained as a parking row and the piece of information transmitted from the provisional parking row determination section 13B and representing the position of the provisional rectangular frame PRT.

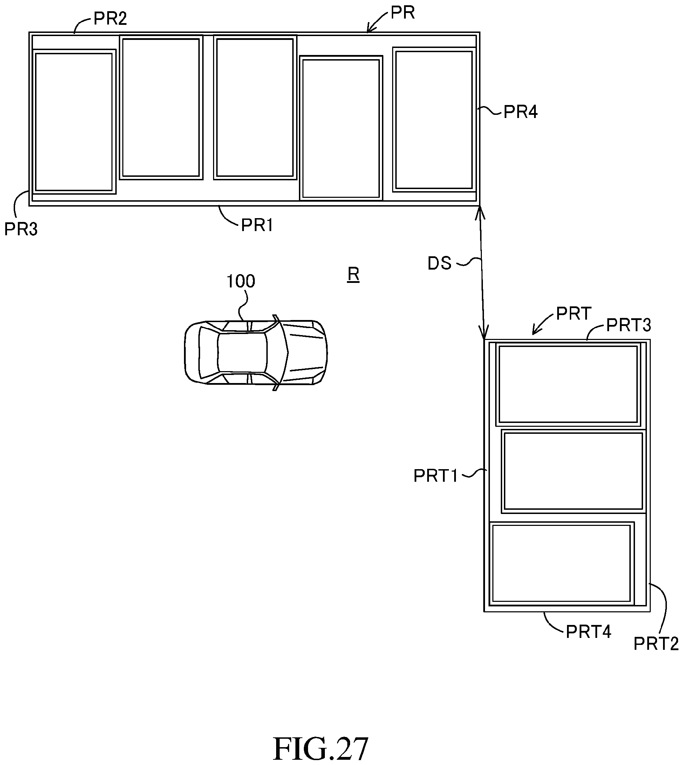

Specifically, in the case where, as shown in FIG. 27, the shortest separation distance DS between the rectangular frame PR and the provisional rectangular frame PRT (in the example shown in the drawing, the distance between their corner portions located on the corridor R side) is equal to or less than a predetermined eighth threshold value, the parking row determination section 13A determines that the provisional parking row defined by the provisional rectangular frame PRT is a parking row. No particular limitation is imposed on the eighth threshold value, and it is sufficient that the eighth threshold value is set on the basis of the width (for example, 8 to 10 m) of a typical corridor of a general public parking lot. As described above, even a provisional parking row in which the number of a parking slot(s) and/or a parked vehicle contour line(s) located in succession is smaller than the first threshold number is considered as a parking row in the case where the provisional parking row is located near a parking row in which the number of a parking slot(s) and/or a parked vehicle contour line(s) located in succession is equal to or greater than the first threshold number. Thus, it becomes possible to effectively detect, as a parking row, a small number of parking slots PL provided at, for example, an end of a corridor R of a parking lot of a large store or the like.

The parking lot staying determination section 16 determines whether or not the own vehicle 100 is present in a parking lot on the basis of the piece of information transmitted from the parking row determination section 13Aand representing the position of the parking rows (the rectangular frames PR and PRT) in relation to the own vehicle 100 and the piece of information transmitted from the travel path prediction section 15 and representing the predicted travel path TP of the own vehicle 100. As in the case of the first embodiment, the parking lot staying determination section 16 determines whether or not the predicted travel path TP of the own vehicle 100 intersects with the front-side parking row line PR1 of the rectangular frame PR which defines the parking row. Also, the parking lot staying determination section 16 determines whether or not the predicted travel path TP of the own vehicle 100 intersects with the front-side provisional parking row line PRT1 of the provisional rectangular frame PRT which defines the provisional parking row considered as a parking row. In the case where the parking lot staying determination section 16 determines that the predicted travel path TP intersects with at least one of the parking row lines PR1 and PRT1, the parking lot staying determination section 16 computes a predicted reaching time TA necessary for the own vehicle 100 at the present position to reach an intersecting position where the predicted travel path TP intersects with the parking row line. In the case where the computed, predicted reaching time TA is equal to or shorter than the predetermined threshold time, the parking lot staying determination section 16 determines that the own vehicle 100 is present in the parking lot P.

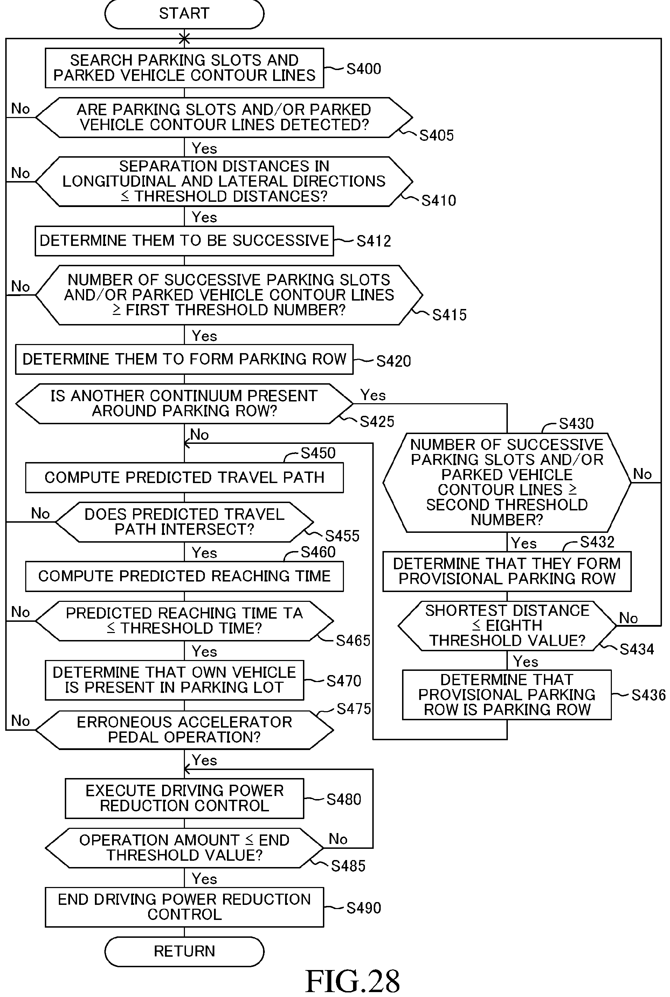

Next, a routine of a process for parking row determination, parking lot staying determination, and driving power reduction control performed by the ECU 10 according to the fourth embodiment will be described on the basis of the flowchart shown in FIG. 28.

In step S400, the ECU 10 searches a parking slot(s) PL and a parked vehicle contour line(s) VL around the own vehicle 100 on the basis of image data (i.e., data of the image captured by the camera sensor 41). Subsequently, in step S405, the ECU 10 determines whether or not at least either of a parking slot(s) PL and a parked vehicle contour line(s) VL was able to be obtained from the image data. In the case where at least either of a parking slot(s) PL and a parked vehicle contour line(s) VL was able be obtained (Yes), the ECU 10 proceeds to step S410. Meanwhile, in the case where neither of a parking slot(s) PL and a parked vehicle contour line(s) VL can be obtained (No), the ECU 10 returns to step S400 so as to continue the searching of a parking slot(s) PL and a parked vehicle contour line(s) VL.

In step S410, the ECU 10 determines whether or not the separation distances in the longitudinal direction and the lateral direction between the parking slot(s) PL and/or the parked vehicle contour line(s) VL located adjacent to each other are equal to or less than a predetermined threshold value. Since a specific process is the same as that of the above-described step S110 (see FIG. 15), its description will not be repeated. In the case where the above condition is satisfied (Yes), the ECU 10 proceeds to step S412 to determine that the parking slot(s) PL and/or the parked vehicle contour line(s) VL located adjacent to each other are successive, and proceeds to step S415. Meanwhile, in the case where the ECU 10 determines in step S410 that the above condition is not satisfied (No), the ECU 10 returns to step S400 so as to continue the searching of a parking slot(s) PL and a parked vehicle contour line(s) VL.

In step S415, the ECU 10 determines whether or not the number of successive parking slots PL, the number of successive parked vehicle contour lines VL, or the number of successive parking slots PL and parked vehicle contour lines VL is equal to or greater than the first threshold number. In the case where the above condition is satisfied (Yes), the ECU 10 proceeds to step S420 so as to determine that they form a parking row and obtain a piece of information representing the position of a rectangular frame PR which defines the parking row, and then proceeds to step S425. Meanwhile, in the case where the ECU 10 determines in step S415 that the above condition is not satisfied (No); namely, the number of a parking slot(s) PL and/or a parked vehicle contour line(s) VL located in succession is less than the first threshold number, the ECU 10 returns to step S400 so as to continue the searching of a parking slot(s) PL and a parked vehicle contour line(s) VL. Notably, in the case where the determination in step S415 reveals that there exist a plurality of sets of successive parking slots and/or parked vehicle contour lines (continuums), the ECU 10 determines in step S420 that the plurality of continuums are parking rows.

In step S425, the ECU 10 determines whether or not another set of successive parking slots PL, another set of successive parked vehicle contour lines VL, or another set of successive parking slots PL and parked vehicle contour lines VL (continuum) is present around the rectangular frame PR obtained in step S420 and defining a parking row. In the case where another continuum is present around the rectangular frame PR (Yes), the ECU 10 proceeds to step S430. Meanwhile, in the case where another continuum is not present around the rectangular frame PR (No), the ECU 10 proceeds to step S450.

In step S430, the ECU 10 determines whether or not the number of successive parking slots PL, the number of successive parked vehicle contour lines VL, or the number of successive parking slots PL and parked vehicle contour lines VL is equal to or greater than the second threshold number and less than the first threshold number. In the case where the above condition is satisfied (Yes), the ECU 10 proceeds to step S432 so as to determine that they form a provisional parking row and obtain a piece of information representing the position of a provisional rectangular frame PRT which defines the provisional parking row.

Next, in step S434, the ECU 10 determines whether or not the shortest separation distance DS between the rectangular frame PR and the provisional rectangular frame PRT is equal to or less than the predetermined eighth threshold value on the basis of the piece of information representing the position of the rectangular frame PR obtained in step S420 and the piece of information representing the position of the provisional rectangular frame PRT obtained in step S432. In the case where a plurality of parking rows have been recognized in the above-described step S420, it is sufficient that the ECU 10 computes the shortest separation distance DS by using one of the plurality of parking rows which is closest to the provisional parking row. In the case where the shortest separation distance DS is equal to or less than the eighth threshold value (Yes), the ECU 10 proceeds to step S436 and determines that the provisional parking row defined by the provisional rectangular frame PRT is a parking row and then proceeds to step S450. Meanwhile, in the case where the ECU 10 determines in step S434 that the shortest separation distance DS is not equal to or less than the eighth threshold value (No), the ECU 10 returns to step S400 so as to continue the searching of a parking slot(s) PL and a parked vehicle contour line(s) VL.

In step S450, the ECU 10 computes a predicted travel path TP of the own vehicle 100 on the basis of the vehicle speed V obtained by the vehicle speed sensor 31 and the steering angle obtained by the steering angle sensor 34. Subsequently, in step S455, the ECU 10 determines whether or not the computed predicted travel path TP intersects with the front-side parking row line PR1 of the rectangular frame PR or the front-side provisional parking row line PRT1 of the provisional rectangular frame PRT considered as a parking row. In the case where the computed predicted travel path TP intersects with the front-side parking row line PR1 or the front-side provisional parking row line PRT1 (Yes), the ECU 10 proceeds to step S460. Meanwhile, in the case where the computed predicted travel path TP does not intersect with the front-side parking row line PR1 or the front-side provisional parking row line PRT1 (No), the ECU 10 returns to step S400 so as to continue the searching of a parking slot(s) PL and a parked vehicle contour line(s) VL.

In step S460, the ECU 10 computes a predicted reaching time TA necessary for the own vehicle 100 at the present position to reach the rectangular frame PR or the provisional rectangular frame PRT. Specifically, in the case where the predicted travel path TP intersects with the front-side parking row line PR1 of the rectangular frame PR, the ECU 10 computes the predicted reaching time TA necessary for the own vehicle 100 at the present position to reach a position where the predicted travel path TP intersects with the front-side parking row line PR1. Also, in the case where the predicted travel path TP intersects with the front-side provisional parking row line PRT1 of the provisional rectangular frame PRT, the ECU 10 computes the predicted reaching time TA necessary for the own vehicle 100 at the present position to reach a position where the predicted travel path TP intersects with the front-side provisional parking row line PR1.

Subsequently, in step S465, the ECU 10 determines whether or not the predicted reaching time TA is equal to or shorter than the predetermined threshold time. In the case where the predicted reaching time TA is equal to or shorter than the predetermined threshold time (Yes), the ECU 10 proceeds to step S470. Meanwhile, in the case where the predicted reaching time TA is not equal to or shorter than the predetermined threshold time (No), the ECU 10 returns to step S400 so as to continue the searching of a parking slot(s) PL and a parked vehicle contour line(s) VL.

In step S470, the ECU 10 determines that the own vehicle 100 is present in the parking lot. Subsequently, in step S475, the ECU 10 determines whether or not the driver has performed an erroneous operation; i.e., erroneously stepped on the accelerator pedal. In the case where all the above-described conditions (1) to (5) are satisfied (Yes), the ECU 10 determines that the accelerator pedal has been erroneously operated by the driver and proceeds to step S480. Meanwhile, in the case where at least one of the above-described conditions (1) to (5) is not satisfied (No), the ECU 10 returns to step S400 so as to continue the searching of a parking slot(s) PL and a parked vehicle contour line(s) VL.

In step S480, the ECU 10 executes the driving power reduction control for controlling the operation of the drive apparatus 20 such that the actual acceleration GA of the own vehicle 100 becomes equal to or lower than the predetermined upper limit acceleration G_{Max}. Subsequently, in step S485, the ECU 10 determines whether or not the accelerator pedal operation amount AP has decreased to the predetermined end threshold value APE or less. In the case where the accelerator pedal operation amount AP has not decreased to the end threshold value APE or less (No), the ECU 10 returns to step S480 so as to continue the driving power reduction control. Meanwhile, in the case where the accelerator pedal operation amount AP has decreased to the end threshold value APE or less (Yes), the ECU 10 proceeds to step S490 so as to end the driving power reduction control and then ends the present routine for the time being. After that, the ECU 10 repeatedly executes the processes of the above-described steps S400 to S490 until the ignition switch or the start button of the vehicle 100 is operated to an OFF state.

According to the fourth embodiment having been described in detail, in the case where a parking row in which the number of a parking slot(s) PL and/or a parked vehicle contour line(s) VL located in succession is equal to or greater than the first threshold number (for example, 5) is recognized around the own vehicle 100, if a provisional parking row in which the number of a parking slot(s) PL and/or a parked vehicle contour line(s) VL located in succession is equal to or greater than the second threshold number (for example, 3) and less than the first threshold number is further recognized and the parking row and the provisional parking row have a predetermined positional relation, the ECU 10 determines that the provisional parking row is a parking row. Thus, it becomes possible to effectively detect, as a parking row, parked vehicles 300 and a small number of parking slots PL provided at, for example, an end of a corridor R of a parking lot P of, for example, a large store or the like. Also, since the driving power reduction control is activated in the case where the predicted travel path TP of the own vehicle 100 intersects with the provisional parking row determined as a parking row, safety can be enhanced without fail, unlike the case where the control is made effective only for the parking row in which the number of successive parking slots and/or parked vehicle contour lines is large.

### [Other comments]

Although the driving assistance apparatuses, the driving assistance methods, and the programs according to the present embodiments have been described above, the present disclosure is not limited to the above-described embodiments and various modifications may be possible so long as the modifications do not depart from the purpose of the present invention.

For example, the above-described embodiments can be practiced in any combination. For example, in the case where the second embodiment and the third embodiment are combined, it is sufficient to modify the operation of the ECU 10 such that, in the case where the result of the determination in step S215 of the control routine of FIG. 19 is negative (No), the ECU 10 executes step S330 of FIG. 25 and proceeds, via the process of step S338, to step S250 of FIG. 19.

Also, in the case where the third embodiment and the fourth embodiment are combined, it is sufficient to modify the operation of the ECU 10 such that the processes of step S425 to step S436 of FIG. 28 are executed between step S220 and step S250 or between step S225 and step S250 in the control routine of FIG. 19.

Also, the fourth embodiment premises that a parking row is recognized. However, the fourth embodiment may be modified such that, in the case where no parking row is recognized, a plurality of provisional parking rows are recognized, and, when these provisional parking rows have a predetermined positional relation, these provisional parking rows are determined to be parking rows. In this case, it is sufficient to modify the operation of the ECU 10 such that, in the case where the result of the determination in step S415 of FIG. 28 is negative (No), the ECU 10 determines whether or not a plurality of provisional parking rows have been obtained, and, when the plurality of provisional parking rows have a predetermined positional relation, the ECU 10 determines that these provisional parking rows are parking rows.

## Claims

1. A driving assistant apparatus comprising:
a parking row recognition section which detects a parking slot(s) and/or a parked vehicle(s) around an own vehicle on the basis of image data of a captured image around the own vehicle and recognizes a parking row in which the detected parking slot(s) and/or the detected parked vehicle(s) are located in succession and adjacent to each other in a predetermined direction and the number of the parking slot(s) and/or the parked vehicle(s) is equal to or greater than a predetermined first threshold number;
a parking lot staying determination section which determines whether or not the own vehicle is present in a parking lot having the parking row;
an erroneous operation determination section which obtains an operation state of an acceleration operation element operated by an occupant of the own vehicle and determines, on the basis of the operation state, whether or not the occupant has performed an erroneous operation of erroneously stepping on the acceleration operation element; and
a control section which executes driving power reduction control of reducing driving power of the own vehicle when the parking lot staying determination section determines that the own vehicle is present in the parking lot and the erroneous operation determination section determines that the occupant has performed the erroneous operation.

2. A driving assistant apparatus according to claim 1, further comprising:
a travel path prediction section which predicts a travel path of the own vehicle on the basis of a travel state of the own vehicle,
wherein the parking lot staying determination section determines that the own vehicle is present in the parking lot when the predicted travel path intersects with the parking row.

3. A driving assistant apparatus according to claim 1 or 2, further comprising:
an inter parking row corridor determination section which determines, as an inter parking row corridor, an area between a plurality of parking rows which are recognized by the parking row recognition section, face each other with the own vehicle intervening therebetween, and have a predetermined positional relation,
wherein the parking lot staying determination section determines that the own vehicle is present in the parking lot when the own vehicle is located in the area.

4. A driving assistant apparatus according to claim 1 or 2, further comprising:
a structure recognition section which recognizes a structure present around the own vehicle on the basis of a piece of information representing an object around the own vehicle; and
a provisional parking row recognition section which detects a parking slot(s) and/or a parked vehicle(s) around the own vehicle on the basis of the image data and recognizes a provisional parking row in which the detected parking slot(s) and/or the detected parked vehicle(s) are located in succession and adjacent to each other in a predetermined direction and the number of the parking slot(s) and/or the parked vehicle(s) is equal to or greater than a predetermined second threshold number which is less than the first threshold number,
wherein, in the case where the structure recognition section recognizes a structure which is located on a side opposite the own vehicle with respect to the provisional parking row and whose length is equal to or greater than a predetermined length, if the structure and the provisional parking row have a predetermined positional relation, the parking row recognition section determines that the provisional parking row is a parking row.

5. A driving assistant apparatus according to claim 3, further comprising:
a structure recognition section which recognizes a structure present around the own vehicle on the basis of a piece of information representing an object around the own vehicle; and
a provisional parking row recognition section which detects a parking slot(s) and/or a parked vehicle(s) around the own vehicle on the basis of the image data and recognizes a provisional parking row in which the detected parking slot(s) and/or the detected parked vehicle(s) are located in succession and adjacent to each other in a predetermined direction and the number of the parking slot(s) and/or the parked vehicle(s) is equal to or greater than a predetermined second threshold number which is less than the first threshold number,
wherein, in the case where the structure recognition section recognizes a structure which is located on a side opposite the own vehicle with respect to the provisional parking row and whose length is equal to or greater than a predetermined length, if the structure and the provisional parking row have a predetermined positional relation, the parking row recognition section determines that the provisional parking row is a parking row.

6. A driving assistant apparatus according to claim 1 or 2, further comprising:
a provisional parking row recognition section which detects a parking slot(s) and/or a parked vehicle(s) around the own vehicle on the basis of the image data and recognizes a provisional parking row in which the detected parking slot(s) and/or the detected parked vehicle(s) are located in succession and adjacent to each other in a predetermined direction and the number of the parking slot(s) and/or the parked vehicle(s) is equal to or greater than a predetermined second threshold number which is less than the first threshold number,
wherein, in the case where at least one or more parking rows are recognized, if the parking rows and the provisional parking row have a predetermined positional relation, the parking row recognition section determines that the provisional parking row is a parking row.

7. A driving assistant apparatus according to claim 3, further comprising:
a provisional parking row recognition section which detects a parking slot(s) and/or a parked vehicle(s) around the own vehicle on the basis of the image data and recognizes a provisional parking row in which the detected parking slot(s) and/or the detected parked vehicle(s) are located in succession and adjacent to each other in a predetermined direction and the number of the parking slot(s) and/or the parked vehicle(s) is equal to or greater than a predetermined second threshold number which is less than the first threshold number,
wherein, in the case where at least one or more parking rows are recognized, if the parking rows and the provisional parking row have a predetermined positional relation, the parking row recognition section determines that the provisional parking row is a parking row.

8. A driving assistant method comprising:
detecting a parking slot(s) and/or a parked vehicle(s) around an own vehicle on the basis of image data of a captured image around the own vehicle and recognizing a parking row in which the detected parking slot(s) and/or the detected parked vehicle(s) are located in succession and adjacent to each other in a predetermined direction and the number of the parking slot(s) and/or the parked vehicle(s) is equal to or greater than a predetermined first threshold number;
determining whether or not the own vehicle is present in a parking lot having the parking row;
obtaining an operation state of an acceleration operation element operated by an occupant of the own vehicle and determining, on the basis of the operation state, whether or not the occupant has performed an erroneous operation of erroneously stepping on the acceleration operation element; and
executing driving power reduction control of reducing driving power of the own vehicle upon determination that the own vehicle is present in the parking lot and determination that the occupant has performed the erroneous operation.

9. A program for causing a computer of a driving assistant apparatus to perform a process comprising:
detecting a parking slot(s) and/or a parked vehicle(s) around an own vehicle on the basis of image data of a captured image around the own vehicle and recognizing a parking row in which the detected parking slot(s) and/or the detected parked vehicle(s) are located in succession and adjacent to each other in a predetermined direction and the number of the parking slot(s) and/or the parked vehicle(s) is equal to or greater than a predetermined first threshold number;
determining whether or not the own vehicle is present in a parking lot having the parking row;
obtaining an operation state of an acceleration operation element operated by an occupant of the own vehicle and determining, on the basis of the operation state, whether or not the occupant has performed an erroneous operation of erroneously stepping on the acceleration operation element; and
executing driving power reduction control of reducing driving power of the own vehicle upon determination that the own vehicle is present in the parking lot and determination that the occupant has performed the erroneous operation.
